# FASCICULE DE BREVET EUROPEEN

(11) **EP 1 721 827 B1**
(45) Date de publication et mention de la délivrance du brevet: **08.07.2015**
(21) Numéro de dépôt: 06009125.3
(22) Date de dépôt: 03.05.2006
(51) Int. Cl.: B64C 25/00, B64C 25/10, B64C 25/14

(54) **Procédé et système anti-crash, atterrisseur et aéronef**
Anti-crash Verfahren und System, Fahrwerk und Luftfahrzeug
Anti-crash method and system, undercarriage and aircraft

(30) Priorité: 12.05.2005 FR 0504746
(43) Date de publication de la demande: 15.11.2006
(73) Titulaire: Airbus Helicopters, 13725 Marignane Cedex (FR)
(72) Inventeur: Payen, Hervé, 13880 Velaux (FR); Malfuson, Vincent, 13090 Aix en Provence (FR)
(74) Mandataire: GPI & Associés

(56) Documents cités:
- FR-A- 2 687 123
- FR-A- 2 689 087
- US-A- 4 537 374

## Description

L'invention concerne le domaine du fonctionnement spécifique d'un atterrisseur d'aéronef, en cas d'atterrissage en urgence.

Un tel atterrisseur est parfois appelé « train d'atterrissage », et un atterrissage en urgence ou catastrophe est appelé « crash ».

Notamment, l'invention vise des procédé et système anti-crash pour un atterrisseur d'aéronef, par exemple à voilure tournante.

Dans nombre d'aéronefs, notamment pour optimiser l'aérodynamisme ainsi que la consommation en carburant, on prévoit des atterrisseurs qui sont montés de façon escamotable ou repliable.

Parmi ces atterrisseurs, l'invention concerne ceux qui sont appelés « trains droits ».

Afin d'être escamotables, les trains droits comportent une jambe à l'extrémité inférieure de laquelle est montée au moins une roue, la jambe pivotant autour d'un axe principal transversal pour pouvoir être escamotée dans une case du fuselage, sous l'effet d'un vérin de rétraction.

Actuellement, rares sont les trains droits escamotables qui présentent des fonctions anti-crash. Lorsque tel est le cas, ces fonctions sont en pratique limitées, voire insuffisantes au regard des normes applicables.

À titre d'illustration, citons le document FR2687123 qui décrit un train relevable d'hélicoptère.

Afin de faire face à une situation d'atterrissage en catastrophe malgré une course limitée de sa jambe élastique, ce train d'atterrissage comporte un dispositif additionnel d'absorption d'énergie à seuil d'effort, qui est intégré au vérin de manoeuvre.

En cas d'atterrissage en catastrophe, le vérin de manoeuvre reste articulé sur la jambe de train et le dispositif d'absorption autorise la remontée par pivotement contrôlé du train.

On observe avec un tel train droit principalement deux phases lors d'un crash ; d'où découlent des fonctions anti-crash dédiées, c'est-à-dire distinctes à chaque phase, à savoir :
- une première phase, sous l'effet de l'entrée en contact de l'atterrisseur avec la surface de posée, durant laquelle il convient d'assurer une première fonction d'amortissement visant à absorber l'énergie d'écrasement axial de l'atterrisseur ; et
- une deuxième phase de crash, généralement postérieure à la première et durant laquelle il convient d'assurer le freinage en rotation de la jambe de train.

En pratique, on a toutefois exclusivement proposé à ce jour des atterrisseurs droits escamotables à fonction anti-crash spécifique à la première phase.

Dans de tels atterrisseurs, cette fonction spécifique est un amortissement obtenu à l'aide d'un tube coulissant (par exemple en matériau composite, notamment en carbone).

Ce tube peut coulisser en cas de crash, sensiblement suivant la direction de la fibre axiale centrale de la jambe de train, par rapport à l'axe d'escamotage de cette jambe dans sa case. En fonctionnement hors crash, ce coulissement est bloqué par un verrou sécable.

Si la vitesse d'entrée en contact des roues à la posée atteint une valeur de seuil égale aux vitesses de crash, ceci provoque le cisaillement du verrou sécable.

Ce cisaillement libère à son tour le coulissement du tube coulissant, depuis la position fonctionnelle de la jambe de train.

Alors le tube se déplace sensiblement suivant la direction de la fibre axiale centrale de la jambe de train, à effort quasi-constant, en absorbant l'énergie générée en première phase de crash.

Lors de la première phase de crash, la fonction de rétraction normale du vérin est inhibée, du fait des vitesses d'écrasement axial de l'atterrisseur (qui sont de l'ordre de 8 à 11 m/s, contre moins de 1 m/s en atterrissage normal).

Selon le document FR2687123, une fois cette fonction de rétraction inhibée, le vérin absorbe l'énergie issue du pivotement de la jambe de train autour de son axe principal d'escamotage.

C'est le dispositif d'absorption intégré au vérin de manoeuvre qui limite et contrôle ce pivotement, qui constitue ici l'essentiel de la deuxième phase de crash.

Mais avec ces trains droits connus, la jambe de train a tendance à remonter violemment vers l'intérieur de l'aéronef, au-delà de sa case d'escamotage.

En outre, l'inhibition du vérin de rétraction à l'issue de la première phase de crash, autorise le relâchement de l'énergie de compression des pneumatiques de l'atterrisseur.

Cette énergie relâchée accroît encore l'accélération du pivotement de remontée de la jambe de train en deuxième phase de crash.

Par ailleurs, dans certains trains droits actuels, il existe un déport longitudinal dans le sens d'avancement de l'aéronef lors du crash, entre la fibre axiale centrale de la jambe et l'axe de roulement de sa ou de ses roues.

Un tel déport est courant -par exemple dans les trains orientables de nez- afin de faciliter les manoeuvres de l'aéronef, par braquage de ses roues.

Du fait du bras de levier supplémentaire ainsi généré, on constate alors en deuxième phase de crash, une accélération accrue de la remontée de la jambe de train.

Tout ceci engendre un pivotement initial de l'atterrisseur en deuxième phase de crash, avec typiquement une amplitude de l'ordre de 90° et une vitesse angulaire de sensiblement 40 radians par seconde (noté r/s), par exemple.

Dans le cas d'un atterrisseur droit escamotable ayant par exemple un poids de l'ordre de 70kg, l'effort ainsi généré peut être de l'ordre de 35000 Newton.

Des dégâts matériels risquent d'être ainsi générés notamment dans la paroi supérieure de la case de train et les structures connexes, par exemple au sein du plancher de cabine dans le cas d'un train de nez.

Également, des dommages humains inacceptables risquent d'être provoqués lors de la deuxième phase de crash, si des personnes sont alors à proximité du train.

À ce stade, citons d'autres documents du domaine technique des installations anti-crash d'aéronef.

Le document FR2472115 décrit un équipement de freinage d'un corps en mouvement, qui comprend des bandes en principe non élastiques aptes à recevoir l'impact du corps en mouvement.

Ces bandes sont reliées à des moyens de freinage réglables.

Le document FR2316483 décrit un dispositif auxiliaire d'absorption d'énergie cinétique pour une barrière d'arrêt d'avion située sur un terrain ou zone d'atterrissage.

Ce dispositif forme un frein entièrement en textile, ne comportant aucune pièce mécanique en mouvement, et d'encombrement réduit. Ce frein comporte des sangles lovées, solidarisées par des moyens destructibles de retenue tels que des coutures, et reliées à la barrière.

De fait, quand un avion à arrêter est pris dans la barrière, les sangles se séparent progressivement par rupture des fibres, et le freinent puis l'immobilisent.

Des applications d'un tel équipement sont prévues notamment en fin de piste ou sur un pont d'atterrissage de porte-avions. Par ailleurs, l'équipement peut être adjoint à une charge à larguer à partir d'un avion, hélicoptère ou ballon, pour la protéger des effets de la prise de contact avec le sol.

Le document FR2684957 décrit un dispositif d'écrêtage d'efforts pour amortisseurs de train d'atterrissage d'hélicoptère.

Un amortisseur comporte une tige de piston qui est agencée en bas et un corps principal en haut. La tige de piston et le corps principal sont articulés via des embouts à rotules, respectivement inférieurement sur un composant du train et supérieurement sur une structure de l'hélicoptère.

Ce train d'atterrissage n'est pas orientable, et le dispositif d'écrêtage d'efforts est toujours intégré à l'amortisseur.

Citons également des documents d'intérêt, relativement aux atterrisseurs.

Le document FR2689087 décrit un atterrisseur relevable d'aérodyne tel qu'un hélicoptère.

Une jambe de train est montée pivotante sur une structure de l'aérodyne autour d'un axe essentiellement perpendiculaire au plan longitudinal médian.

Un vérin de manoeuvre est associé à la jambe de train pour sa descente et son escamotage.

Par ailleurs, ce vérin sert d'amortisseur à seuil d'effort, et applique un couple prédéterminé tendant à maintenir la jambe de train dans la position qu'elle occupe lors de l'atterrissage, tout en autorisant son relevage avec un effort contrôlé en cas d'atterrissage en catastrophe.

Au-delà d'un seuil prédéterminé qui correspond à une situation d'atterrissage en catastrophe, les roues de l'atterrisseur transmettent un effort important à la jambe d'atterrisseur.

Le seuil d'effort étant dépassé, le vérin amortisseur autorise un pivotement dans le sens de l'escamotage de la jambe de train.

Le document FR2689088 décrit un amortisseur à vérin pour hélicoptère qui comporte une fonction de limitation d'effort en cas de crash.

Il comporte aussi une contre-fiche et assure les fonctions de manoeuvre, d'amortissement et d'écrêtage d'efforts.

Le document US5944283 décrit un amortisseur pour atterrisseur anti-crash. Son axe de balancier présente un déport.

Mais l'enseignement de ce qui précède notamment, ne permet pas de disposer de fonctions anti-crash efficaces pour atterrisseur droit escamotable d'aéronef.

En particulier, on ne dispose pas en pratique de fonctions qui assurent une protection efficace des matériels et des humains à bord de l'appareil, lors de la deuxième phase de crash.

En effet, pour sécuriser cette deuxième phase de crash, l'adaptation des solutions prévues pour la première phase, présente de nombreux inconvénients rédhibitoires, quand elle n'est pas impossible.

De plus, il convient pour sécuriser cette deuxième phase de crash, de respecter notamment les critères suivants :
- que l'adaptation n'entraîne pas de modifications importantes de l'environnement de l'atterrisseur (existant ou en conception) ;
- que la masse embarquée supplémentaire soit réduite voire négligeable ;
- que l'encombrement supplémentaire soit réduit voire négligeable ;
- que la sécurité soit assurée effectivement, face aux efforts ;
- que les cinématiques engendrées soient compatibles avec les fonctionnements normaux ou anti-crash en première phase ;
- que les coût et facilité d'installation et de maintenance soient les plus faibles que possible ; et
- que les moyens ajoutés soient à la fois robustes et pérennes.

Ces critères sont encore plus draconiens pour les aéronefs à voilure tournante, avec lesquels les questions d'encombrement du train et de stabilité à la posée sont particulièrement contraignantes.

En termes de sécurité en deuxième phase de crash, l'invention devrait permettre par exemple :
- la compatibilité avec une vitesse d'impact de l'ordre de 7 à 9 m/s, par exemple d'à peu près 8,2 mètre par secondes (noté m/s) ;
- la compatibilité avec une vitesse de pivotement de l'atterrisseur en deuxième phase, supérieure ou égale à 10 radians (r/s) par seconde ;
- qu'un pivotement libre de la jambe de train avant son freinage anti-crash, puisse être à la fois autorisé et contrôlé, et ce sur des valeurs angulaires respectives prédéterminées ; et
- que les forces d'impact maximales sur la structure de l'aéronef (par exemple le plancher au dessus de la case de train pour un atterrisseur de nez) en fin de course de deuxième phase de l'atterrisseur, soient compatibles avec la résistance de la structure environnante, afin de ne pas dégrader celle-ci.

Par exemple jusqu'à une valeur de l'ordre de 25000 N, les forces d'impact de crash ne doivent pas être transmises à la structure de reprise, et leur énergie doit être absorbée.

Également, il convient que les normes de sécurité, tant actuelles que prochaines, soient respectées afin d'assurer une homologation aisée et rapide de l'aéronef selon l'invention.

Le but de l'invention est donc de pallier les problèmes et de respecter le plus grand nombre possible de critères évoqués.

À cette fin, l'invention prévoit notamment de :
- libérer les fonctions qui sont assumées hors crash, notamment de rétraction et/ou d'amortissement, par rapport à celles qui sont spécifiquement anti-crash, notamment en deuxième phase ;
- dédier à des moyens propres, au moins une partie des fonctions anti-crash spécifiques, notamment en deuxième phase ; et
- maintenir sensiblement le vérin de rétraction dans les position et état où il se trouve au moins à partir de l'entrée en deuxième phase de crash.

Dans un certain sens, ces choix technologiques sont quelque peu paradoxaux, puisque :
- la libération des fonctions hors crash peut paraître à priori en opposition avec les objectifs courants d'intégration fonctionnelle d'usage dans le domaine aéronautique ;
- l'emploi de moyens dédiés anti-crash peut paraître à priori en opposition avec les objectifs courants dans le domaine aéronautique, de réduction des masses et encombrements embarqués ;
- le blocage du vérin de rétraction, sans pour autant qu'il ne devienne un moyen d'absorption d'énergie, peut paraître à priori en opposition avec l'usage actuel dans le domaine des transports, qui vise en cas de crash à employer le plus possible de constituants en tant que moyen d'absorption ou de protection ; et
- la transparence fonctionnelle des fonctions spécifiques à la deuxième phase de crash, en marche normale du train, et en conséquence leur intégration à une chaîne cinématique en cas de crash, peut sembler en opposition à priori avec l'obtention d'une réactivité immédiate qui est recherchée dans le domaine aéronautique.

Mais à l'inverse des préjugés, on obtient de manière étonnante avec l'invention, notamment :
- par la libération des fonctions hors crash, une transmission canalisée et simplifiée des efforts de crash vers des constituants dédiés de la structure (d'où gains de masse embarquée et réduction des coûts de fabrication / entretien des moyens assumant ces fonctions hors crash, tant au sein du train que de la structure de reprise de l'aéronef) ;
- par l'emploi de moyens dédiés anti-crash, des performance, pérennité et vérifications optimisées de ces moyens, indépendamment de leur environnement, ainsi qu'une possibilité accrue de contrôle des mouvements libres ou d'absorption d'énergie au sein du train ;
- par le blocage du vérin de rétraction, sans pour autant qu'il ne devienne un moyen d'absorption d'énergie, la possibilité de soit le shunter, soit l'employer à des fins de transmission d'efforts de crash ; et
- par leur intégration sélective seulement lors de la deuxième phase de crash, la garantie que les fonctions spécifiques au crash ont subi le moins d'altérations possibles pendant l'emploi normal du train ; et
- par le maintien en position du vérin de rétraction, des risques diminués voire annihilés d'interférence.

Dans le même ordre d'idées, on verra que l'invention faisant appel à des déformations plastiques pour l'absorption d'énergie de crash en deuxième phase, on s'affranchi des risques de défaillance propres aux systèmes hydrauliques par exemple.

En outre, du fait que l'invention libère les fonctions hors crash, des constituants du train distincts de ceux exerçant les fonctions spécifiques de crash, peuvent être mis à profit pour obtenir des résultats supplémentaires, tels qu'un freinage additionnel en fin de course de crash par mise en contact de ces constituants distincts du train avec une zone déformable de leur environnement.

Notons qu'après libération mutuelle du vérin de rétraction et de la jambe de train, c'est-à-dire une fois cette jambe fonctionnellement désolidarisée du vérin, ce dernier à tendance à tomber par pivotement autour de son articulation transversale d'ancrage à la structure de reprise de l'aéronef.

Le vérin de rétraction ainsi fonctionnellement désolidarisé pourrait en conséquence venir lors de la deuxième phase de crash, d'une part en contact avec la surface de posée par son extrémité de liaison libérée, et violement percuter le haut de la case de train, voire pénétrer à travers cette case dans des parties fonctionnellement vitales ou humainement occupées de l'aéronef.

D'autre part, le vérin ainsi fonctionnellement désolidarisé pourrait entraver le bon fonctionnement d'autres organes de l'aéronef lors de la deuxième phase de crash.

Dans un cas comme dans l'autre, le risque de dommages humains et/ou matériels inacceptables est important, et mériterait d'être pallié.

On comprend donc que l'invention a pour but notamment de pallier ces risques propres à la deuxième phase de crash.

À cet effet, un objet de l'invention est un procédé embarqué anti-crash pour un atterrisseur d'aéronef par exemple à voilure tournante. Cet atterrisseur de type escamotable, prévoit au moins :
- une jambe de train articulée sur une structure de reprise d'efforts de l'aéronef autour d'un axe transversal de pivotement, afin de permettre ses sorties et escamotages ;
- un vérin de rétraction avec une extrémité de raccord articulée sur la structure de reprise, afin de provoquer les sorties et escamotages de la jambe de train ;
- des premiers moyens anti-crash, afin d'assurer en première phase de crash une fonction d'amortissement de l'écrasement de l'atterrisseur ; et
- des deuxièmes moyens anti-crash, afin d'assurer en deuxième phase, des fonctions d'inhibition de la rétraction, ainsi que de freinage du pivotement de la jambe.

Selon l'invention, lors d'une deuxième phase de crash à l'issue de la première phase, ce procédé assure au moins les étapes ou fonctions supplémentaires suivantes de :
- désolidarisation fonctionnelle de la jambe de train par rapport au vérin de rétraction ;
- rétention et blocage du vérin de rétraction ; et
- une fois le vérin bloqué, freinage contrôlé du pivotement de la jambe de train autour de son axe transversal.

Une réalisation prévoit que l'étape de freinage du pivotement est au moins en partie assurée par une phase d'allongement irréversible d'une liaison déformable entre la structure de reprise et la jambe de train, par exemple à effort sensiblement constant.

Selon un exemple de mise en oeuvre, la phase d'allongement est au moins en partie opérée par au moins une action de destruction partielle permettant une extension contrôlée de la liaison déformable, par exemple cette liaison est directe entre la structure de reprise et la jambe de train.

Selon un exemple de mise en oeuvre, la phase d'allongement est au moins en partie opérée par au moins une action de déformation plastique permettant un déploiement contrôlé de la liaison déformable, par exemple cette liaison est indirecte entre la structure de reprise et la jambe de train, et comporte une fonction de renvoi entre la structure et la jambe.

Selon un exemple de mise en oeuvre, la phase d'allongement est au moins en partie opérée par une phase d'allongement d'une liaison déformable impermanente entre la structure et la jambe, par exemple cette liaison est obtenue par interposition provoquée de cette liaison avant la deuxième phase de crash.

Selon un exemple de mise en oeuvre, l'interposition provoquée de cette liaison avant la deuxième phase de crash, est réalisée par mise en prise lors de la première phase, d'un tube coulissant dans la jambe de train avec un collet ou analogues.

Selon un exemple de mise en oeuvre, la phase d'allongement est au moins en partie opérée par une phase d'allongement d'une liaison permanente entre la structure et la jambe, par exemple cette liaison actionne un basculement entre la jambe de train et le vérin de rétraction, ce vérin restant articulé sur la jambe durant la deuxième phase de crash.

Selon un exemple de mise en oeuvre, un pivotement libre de la jambe avant son freinage est assuré avec une amplitude prédéterminée, par exemple comprise entre 1° et 30°, notamment de l'ordre de 9° ou 22° dans le cas d'une amplitude totale de la jambe de l'ordre de 90°.

Selon un exemple de mise en oeuvre, l'étape de freinage de la jambe autour de l'axe transversal, est en partie assurée par mise en contact de la jambe avec un butoir d'absorption d'énergie de crash en deuxième phase de crash, puis déformation plastique de ce butoir par la jambe, par exemple un tube coulissant d'extrémité supérieure de la jambe de train vient déformer un butoir comprenant une paroi avant d'une case d'escamotage du train en fin de deuxième phase de crash.

Selon un exemple de mise en oeuvre, lors de la première phase de crash, une partie supérieure de la jambe de train coulisse sensiblement de bas en haut et vient percuter une zone à déboutonner d'une paroi supérieure d'une case d'escamotage du train, et désolidariser cette zone de la paroi supérieure, sans absorption notable d'énergie.

Selon un exemple de mise en oeuvre, les étapes de rétention du vérin en position effacée et de freinage contrôlé de la jambe de train sont au moins en partie effectuées simultanément, voire conjointement en parallèle.

Selon un exemple de mise en oeuvre, la désolidarisation fonctionnelle de la jambe de train par rapport au vérin de rétraction, est effectuée par séparation, par exemple un verrou sécable une fois cisaillé par l'écrasement de la jambe libère un mécanisme de rétention en position fonctionnelle du vérin de sorte qu'une extrémité de liaison du vérin est détachée de la jambe.

Selon un exemple de mise en oeuvre, la désolidarisation fonctionnelle de la jambe de train par rapport au vérin de rétraction, est effectuée par basculement de la liaison qui est permanente et indirecte, par exemple un verrou sécable une fois cisaillé par l'écrasement de la jambe libère un mécanisme de rétention en position fonctionnelle du vérin de sorte qu'une extrémité de liaison du vérin est relâchée par rapport à la jambe, tandis qu'une articulation fixe permet le basculement de la liaison jusqu'à une position d'alignement des extrémités de liaison et fixe du vérin avec une zone d'attache de la liaison permanente sur la jambe.

Un autre objet de l'invention vise un système anti-crash pour un atterrisseur à embarquer sur un aéronef.

Cet atterrisseur est de type escamotable, possédant au moins : une jambe de train montée pivotante autour d'un axe transversal, sur une structure de reprise d'efforts de l'aéronef ; un vérin de rétraction de la jambe agencé pour provoquer les sorties et escamotages de la jambe, avec une extrémité de raccord articulée sur la structure.

Ce système comporte au moins :
- des premiers moyens anti-crash agencés pour assurer un amortissement de l'écrasement de l'atterrisseur lors d'une première phase de crash ; et
- des deuxièmes moyens anti-crash, agencés pour assurer l'inhibition de la rétraction, et le freinage du pivotement de la jambe lors d'une deuxième phase de crash.

Selon l'invention, ce système comprend au moins :
- des moyens de désolidarisation fonctionnelle de la jambe de train par rapport au vérin, à l'issue de la première phase de crash ;
- au sein des deuxièmes moyens anti-crash, des dispositifs de rétention et de blocage du vérin ; et
- au sein des deuxièmes moyens anti-crash, un dispositif de freinage contrôlé du pivotement de la jambe de train, distinct du vérin de rétraction.

Selon un exemple de réalisation, ce système est apte à mettre en oeuvre le procédé évoqué plus haut.

Selon un exemple de réalisation, les moyens de désolidarisation fonctionnelle de la jambe sont des moyens de séparation distincts de la liaison, par exemple un verrou sécable à cisailler est agencé pour permettre la libération d'un mécanisme de rétention du vérin en position fonctionnelle, de sorte qu'une extrémité de liaison du vérin est détachée de la jambe.

Selon un exemple de réalisation, les moyens de désolidarisation fonctionnelle de la jambe sont des moyens de basculement de la liaison permanente, par exemple un verrou sécable à cisailler est agencé pour permettre la libération d'un mécanisme de rétention du vérin en position fonctionnelle, de sorte qu'une extrémité du vérin est relâchée par rapport à la jambe alors qu'une articulation fixe du vérin permet le basculement de la liaison permanente, jusqu'à une position d'alignement des extrémités de liaison et fixe avec une zone d'attache de la liaison à la jambe.

Selon un exemple de réalisation, le dispositif de rétention est agencé pour que le vérin soit maintenu sensiblement dans une position effacée vis-à-vis de la jambe, et est solidarisé à la structure de reprise.

Selon un exemple de réalisation, le dispositif de rétention est au moins en partie directement solidarisé à la structure de reprise, par exemple ce dispositif comporte au moins :
- un brin rigidement fixé par l'une de ses extrémités à une paroi de la structure telle qu'un plancher, tandis que l'autre de ses extrémités est rigidement fixée au vérin ; et/ou
- un brin rigidement fixé à chacune de ses extrémités à une paroi de la structure telle qu'un plancher, et formant berceau en chaînette où repose le vérin.

Selon un exemple de réalisation, le dispositif de rétention est au moins en partie indirectement solidarisé à la structure de reprise, par exemple ce dispositif comporte au moins un brin solidaire d'un dispositif de freinage, par exemple ce brin est intégré à un dispositif de freinage à sangles et/ou rigidement fixé à une paroi de la structure telle qu'un plancher, avec :
- l'une des extrémités du brin qui est rigidement fixée au dispositif de freinage, tandis que son autre extrémité est rigidement fixée au vérin ; et/ou
- chacune des extrémités du brin rigidement fixée au dispositif de freinage, le brin formant berceau en chaînette où repose le vérin.

Selon un exemple de réalisation, le dispositif de blocage du vérin fait partie des premiers moyens anti-crash, par exemple ce dispositif de blocage est au moins en partie intégré à ce vérin et relié à au moins un capteur de vitesse et/ou d'intégrité du système et/ou d'efforts appliqués au train afin de bloquer le vérin de rétraction dans la position où il se trouve lorsqu'une valeur mesurée par le capteur est égale à une valeur prédéterminée de crash.

Selon un exemple de réalisation, le dispositif de freinage des deuxièmes moyens anti-crash est solidarisé d'une part directement ou indirectement à la structure de reprise et d'autre part à la jambe de train, par exemple à une zone d'attache ou à un tube coulissant.

Selon un exemple de réalisation, le dispositif de freinage et le dispositif de rétention des deuxièmes moyens anti-crash sont au moins en partie voire complètement formés par les mêmes constituants, par exemple au moins l'un des constituants de solidarisation à la structure du dispositif de freinage et/ou à la jambe de train est confondu avec un constituant de solidarisation du dispositif de rétention.

Selon un exemple de réalisation, le dispositif de freinage et le dispositif de rétention des deuxièmes moyens anti-crash sont dénués de constituants pneumatique, hydraulique ou électrique tels que commande et/ou asservissement, par exemple ces dispositifs de freinage et de rétention sont entièrement mécaniques.

Selon un exemple de réalisation, le dispositif de freinage et/ou le dispositif de rétention des moyens anti-crash sont étendus sensiblement suivant une direction longitudinale, par exemple en position effacée au moins du dispositif de rétention et/ou dans une position de fin de course du dispositif de freinage.

Selon un exemple de réalisation, le dispositif de freinage des deuxièmes moyens anti-crash possède au moins un organe de liaison à déformation irréversible par allongement contrôlé, par exemple à effort sensiblement constant.

Selon un exemple de réalisation, au moins un organe de liaison est du type à allongement par destruction partielle permettant une extension contrôlée de la liaison déformable, par exemple cette liaison est directe entre la structure de reprise et la jambe de train.

Selon un exemple de réalisation, la liaison déformable est impermanente entre la structure et la jambe, par exemple cette liaison est effective quand elle comporte un tube coulissant dans la jambe et interposé au sein de la liaison par les premiers moyens anti-crash, ce tube assurant la mise en prise de la jambe avec un collet ou analogues du dispositif de freinage.

Selon un exemple de réalisation, au moins un organe de liaison est du type à allongement par déformation plastique contrôlée permettant un déploiement contrôlé de la liaison déformable, par exemple cette liaison est indirecte entre la structure de reprise et la jambe de train, et comporte un constituant de renvoi d'efforts de crash depuis la jambe vers la structure.

Selon un exemple de réalisation, la liaison déformable est permanente entre la structure et la jambe, par exemple cette liaison est basculante entre la jambe de train et le vérin de rétraction, ce vérin restant constamment articulé sur la jambe et faisant office de constituant de renvoi d'efforts de crash depuis la jambe vers la structure.

Selon un exemple de réalisation, le dispositif de freinage des moyens anti-crash spécifiques comporte des moyens de débattement libre de la jambe par rapport à la structure sur une amplitude limitée de début de deuxième phase avant freinage, par exemple ces moyens autorisent un débattement libre par pivotement sur une amplitude de l'ordre de 1° à 30°, par exemple pour une amplitude totale de la jambe de l'ordre de 90°, cette amplitude étant de l'ordre de 9° pour un dispositif de freinage extensible et impermanent, tandis qu'elle est de l'ordre de 22° pour un dispositif de freinage à déployer et permanent.

Selon un exemple de réalisation, le dispositif de freinage de la jambe comporte un butoir d'absorption d'énergie de crash en deuxième phase de crash par déformation plastique, par exemple ce butoir comprend une paroi avant d'une case d'escamotage du train qui est déformé en fin de deuxième phase de crash par un tube coulissant d'extrémité supérieure de la jambe de train.

Selon un exemple de réalisation, l'organe à déformation plastique comprend au moins une pièce en forme de fer à cheval apte à se déformer par linéarisation irréversible et/ou une pièce en forme de tube apte à se déformer par rétraction irréversible, par exemple l'organe possède deux pièces en forme de fer à cheval agencées de part et d'autre d'un plan médian d'élévation longitudinale, de manière symétrique

Selon un exemple de réalisation, une pièce unique en forme de fer à cheval est agencée sensiblement dans un plan médian d'élévation longitudinale et comporte d'une part une articulation mobile liée à une extrémité de liaison du vérin et d'autre part une articulation liée à une zone d'attache de la jambe, les articulations de la pièce en forme de fer à cheval étant sensiblement étendues suivant une direction transversale.

Selon un exemple de réalisation, l'organe de liaison est impermanent à extension par destruction partielle et comporte au moins une sangle lovée en au moins une série de boucles qui sont maintenues lovées par des agencements de retenue destructibles, par exemple ces agencements comportent des coutures et/ou un encollage et/ou soudage dont la destruction permet un déploiement contrôlé et progressif de la sangle de liaison.

Selon un exemple de réalisation, l'organe de liaison comporte au moins une sangle dont la partie lovée fait office de partie apte à subir l'action de destruction, par exemple cette sangle est agencée en berceau afin de former une partie du dispositif de rétention du vérin étendue à proximité ainsi qu'au moins partiellement autour d'une partie inférieure de ce vérin.

Selon un exemple de réalisation, l'organe de liaison comporte trois sangles en berceau disposées en « U », avec d'une part une ferrure d'articulation arrière sur la structure de destination et d'autre part un collet avant destiné à l'encerclement de la jambe de train de destination, par exemple une sangle centrale du berceau en « U » est disposée au dessus du vérin et sous le plancher de la structure, des sangles latérales s'étendant vers la bas depuis la sangle centrale.

Selon un exemple de réalisation, le collet est réalisé en acier à très haute teneur tel qu'un acier de type Z15CM17.03.

Selon un exemple de réalisation, l'organe formant berceau en « U » comporte au moins :
- une sangle de fond centrale transversalement et agencée sensiblement dans un plan longitudinal et transversal ; et
- deux sangles latérales formant les branches du « U » et agencées de part et d'autre de la sangle de fond, sensiblement symétriquement par rapport à un plan médian d'élévation longitudinale.

Ces sangles sont articulées dans des lumières de rebroussement, chacune par ses extrémités longitudinales d'une part de la ferrure d'articulation arrière sur la structure et d'autre part du collet avant d'encerclement de la jambe de train.

Selon un exemple de réalisation, l'organe de liaison impermanente à destruction partielle de déploiement contrôlé comporte au moins deux éléments de solidarisation à rupture contrôlée, destinées à maintenir un collet avant d'encerclement de la jambe de train, provisoirement jusqu'en deuxième phase de crash.

Encore un autre objet de l'invention vise un aéronef par exemple à voilure tournante.

Cet aéronef est défini par les caractéristiques de la revendication 41.

Selon l'invention, la structure de reprise comporte au moins une paroi à déboutonner entourée d'une zone fragilisée telle qu'un assemblage par colle et/ou rivets, agencée pour qu'en première phase de crash, une partie d'une jambe de train vienne percuter cette paroi supérieure et la désolidariser du reste de la structure à l'emplacement de la zone, sans absorption notable d'énergie.

Selon un exemple de réalisation, la structure de reprise comporte au moins un butoir d'absorption d'énergie de crash en deuxième phase de crash par déformation plastique, par exemple ce butoir comprend une paroi avant d'une case d'escamotage du train qui est déformé en fin de deuxième phase de crash par un tube coulissant d'extrémité supérieure de la jambe de train.

L'invention est maintenant décrite en référence des exemples de réalisation, donnés à titre non limitatif et illustrés par les dessins annexés dans lesquels :
- la figure 1 est une vue schématique d'élévation longitudinale d'un aéronef à voilure tournante conforme à l'invention, en fait un hélicoptère, représenté de côté avec son extrémité avant dite « nez » vers la gauche et son extrémité arrière dite « queue » vers la droite ;
- la figure 2 est une vue schématique partielle de côté, qui illustre en détail une structure de reprise d'efforts d'aéronef avec une case de train ainsi qu'un atterrisseur auxiliaire de nez rétractable conformes à l'invention, dans un état d'issue imminente d'une première phase de crash, avec le sommet d'une jambe de train en saillie dans la paroi supérieure de la case de train, un vérin de rétraction encore lié fonctionnellement à cette jambe et un système anti-crash pour la deuxième phase ayant déjà capturé la jambe de train en vue de son freinage ;

- la figure 3 est une vue similaire à la figure 2, qui illustre l'atterrisseur conforme à l'invention, dans un état en cours d'une deuxième phase de crash à l'issue de la première, avec la jambe de train ayant pivoté dans la case de train une fois le vérin de rétraction fonctionnellement désolidarisé de cette jambe, le système anti-crash assurant le freinage de la jambe et le maintien en position effacée du vérin ;
- la figure 4 est une vue similaire aux figures 2 et 3, où l'atterrisseur selon l'invention est dans un état de fin de deuxième phase de crash, avec la jambe de train ayant achevé son pivotement freiné, tandis que le vérin de rétraction est toujours maintenu en position effacée ;
- la figure 5 est une vue partielle similaire à la figure 2, qui illustre en détail l'atterrisseur et un système anti-crash conforme à l'invention, où un organe de liaison à allongement contrôlé comporte des sangles à déploiement contrôlé ainsi qu'un collet avant ;
- la figure 6 est une vue en perspective longitudinale d'élévation, qui illustre depuis le dessus avec l'avant vers la droite, un organe de liaison à sangles en berceau et à déploiement contrôlé d'un système anti-crash conforme à l'invention ;
- la figure 7 est une vue schématique en section d'élévation transversale d'une ferrure de support arrière d'un organe de liaison à sangles du système anti-crash conforme à l'invention, et plus spécialement d'une attache à rupture contrôlée de l'organe de liaison sur la structure de reprise de l'aéronef ;
- la figure 8 est une vue partielle en plan transversal et longitudinal de dessus, qui illustre en détail l'atterrisseur, la structure de reprise et un système anti-crash conformes à l'invention ( similaire à celui de la figure 2), où on voit bien le collet avant d'encerclement de la jambe de train ;
- la figure 9 est une vue en perspective longitudinale d'élévation, qui illustre depuis l'avant, une ferrure d'articulation arrière à lumières de rebroussement de sangles d'un système anti-crash conforme à l'invention ;
- la figure 10 est une vue en perspective longitudinale d'élévation, qui illustre depuis le côté par l'arrière, un support d'anse de collet d'encerclement qui forme une attache à rupture contrôlée ici en carbone, dans un système anti-crash conforme à l'invention ;
- la figure 11 est une vue partielle similaire à la figure 5, qui illustre en détails un atterrisseur et un système anti-crash conformes à l'invention, où un organe de liaison à allongement contrôlé comporte une pièce en forme de fer à cheval déformable plastiquement ;
- la figure 12 est une vue similaire à la figure 11, qui illustre en détails l'organe de liaison en forme de fer à cheval dans un état basculé, en fin de course libre et pas encore déployé plastiquement, c'est-à-dire peu après le début de la deuxième phase de crash ;
- la figure 13 est une vue en perspective longitudinale d'élévation, qui illustre depuis le côté par l'avant un atterrisseur et un système anti-crash conformes à l'invention, où un organe de liaison à allongement contrôlé comporte deux pièces en forme de fer à cheval, déformables plastiquement ;
- la figure 14 est une vue schématique partielle de côté, qui illustre un état conforme à l'invention où le sommet de la jambe de train est à distance d'un collet de dispositif de freinage, et le vérin de rétraction retenu par un brin accroché au plancher formant le haut de la case de train ;
- la figure 15 est une vue similaire à celle de la figure 14, qui illustre un état de fin de première phase de crash selon l'invention, où le sommet de la jambe de train ayant déboutonné une zone de fragilité est en prise dans un collet de freinage, le vérin désolidarisé fonctionnellement de la jambe et toujours retenu par un brin d'accrochage à la structure de reprise ;
- la figure 16 est une vue similaire à celle de la figure 15, qui illustre un état de fin de deuxième phase de crash selon l'invention, où le sommet de la jambe de train vient percuter une zone formant butoir de la structure de reprise, pour achever le freinage du collet toujours en prise ;
- la figure 17 est une vue schématique partielle de côté, qui montre une réalisation conforme à l'invention de brin de rétention du vérin de rétraction durant la deuxième phase de crash, unique et fixé au plafond de la structure de reprise ;
- la figure 18 est une vue similaire à la figure 17, qui montre une réalisation conforme à l'invention, de brin de rétention double, fixé au plafond de la structure de reprise et contournant un dispositif de freinage ;
- la figure 19 est une vue similaire à la figure 17, qui montre une réalisation selon l'invention, d'un brin de rétention unique et fixé indirectement à la structure de reprise par l'intermédiaire d'un dispositif de freinage déformable par allongement irréversible ;
- la figure 20 est une vue similaire à la figure 17, qui montre une réalisation conforme à l'invention de brin de rétention double, fixé indirectement à la structure de reprise par l'intermédiaire d'un dispositif de freinage.

Maintenant, décrivons des exemples de réalisation de l'invention.

Dans les dessins, où les éléments similaires sont désignés par les mêmes numéros de référence, sont représentées trois directions orthogonales les unes aux autres.

Une direction Z dite d'élévation, correspond aux hauteur et épaisseur des structures décrites : les termes haut/bas ou inférieur/supérieur s'y réfèrent ; par simplification, cette direction Z est parfois dite verticale.

Une autre direction X dite longitudinale, correspond aux longueur ou dimension principales des structures décrites. Les termes avant/arrière s'y réfèrent ; par simplification, cette direction X est parfois dite horizontale.

Encore une autre direction Y dite transversale, correspond aux largeur ou dimensions latérales des structures décrites. Le terme côté s'y réfère ; par simplification, cette direction Y est parfois considérée comme étant horizontale.

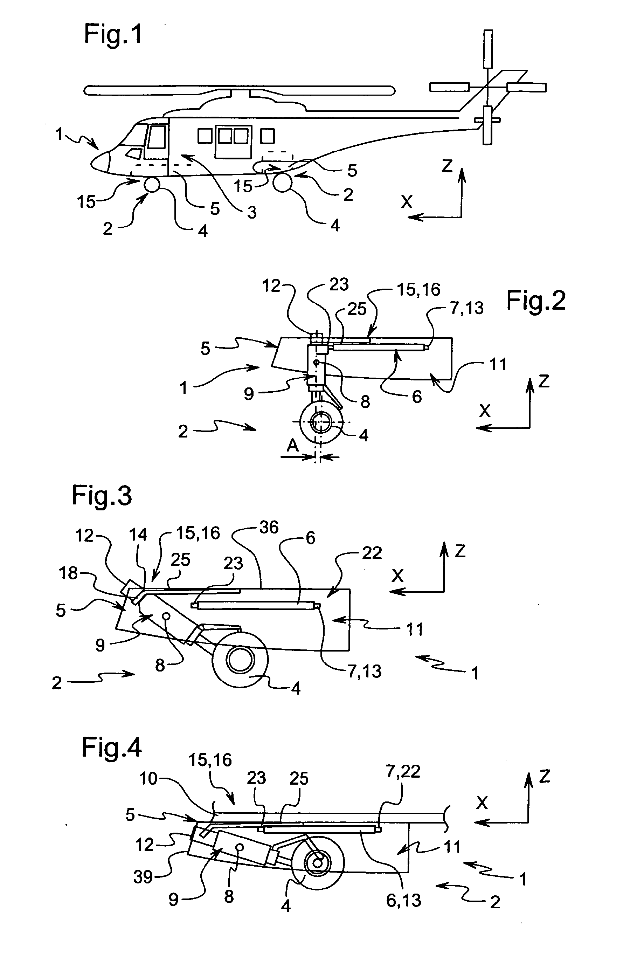

Les directions X et Y définissent conjointement un plan X,Y dit principal (perpendiculaire à celui de la feuille sur la figure 1) à l'intérieur duquel s'inscrit le polyèdre de sustentation et un plan d'atterrissage.

Sur les figures 1 à 4, 8 et 11, la référence 1 désigne de façon générale, un aéronef à voilure tournante. Dans ce cas d'espèce, l'aéronef 1 est un hélicoptère. Plus loin, cet aéronef 1 est parfois appelé « appareil ».

Sur les figures 1 à 11, la flèche de la direction X est orientée vers l'avant de cet aéronef 1. Lorsqu'un composant de cet aéronef 1, tel qu'un train d'atterrissage 2 ou atterrisseur est placé à proximité d'une extrémité longitudinale de l'aéronef 1 proche de son avant, on dit qu'il s'agit d'un composant de nez.

C'est le cas de l'atterrisseur 2 de nez qui est représenté sur les figures 2, 5, 8 et 11, bien que l'invention s'applique à d'autre types d'atterrisseurs d'aéronefs 1.

Au sein de cet hélicoptère 1, on remarque, en particulier sur la figure 1 ou 2, une structure 5 de reprise d'efforts. Une telle structure 5 apporte au fuselage 3 de l'appareil 1, une forte rigidité ainsi qu'un comportement sécuritaire en cas de crash.

Classiquement, chaque atterrisseur 2 possède au moins une roue 4.

Sur les figures 1 à 5, de part et d'autre transversalement, l'atterrisseur 2 possède deux roues 4 d'axe de roulement commun et sensiblement perpendiculaire à un plan longitudinal d'élévation (X, Z) médian de l'appareil 1.

Sur ces figures le plan longitudinal d'élévation (X, Z) est confondu avec celui de la feuille.

Sur les figures 2 à 4, on voit bien que la structure 5 possède pour le montage à pivotement d'un vérin de rétraction 6 de l'atterrisseur 2, au moins un point d'ancrage 7.

Par ailleurs, la structure 5 possède un axe principal 8 transversal de rotation d'une jambe de train 9 de l'atterrisseur 2.

Ainsi, les efforts d'atterrissage sont ici répartis au sein de la structure 5.

Suivant la direction longitudinale X, on constate sur la figure 2 un déport A vers l'arrière entre une fibre axiale centrale de la jambe de train 9 et l'axe de roulement des roues 4.

De ce qui précède, on comprend que l'atterrisseur 2 est un train d'atterrissage de type droit et escamotable, avec un déport de la roue 4.

Sur les figures 3, 5 ou 11, on remarque que la structure 5 comporte aussi un plancher structural 10 inférieur, dit de cabine. Ce plancher 10 supporte dans des réalisations non illustrées, le point d'ancrage 7 du vérin 6 et/ou l'axe transversal 8 de la jambe de train 9.

Dans les réalisations des figures, la structure 5 de reprise d'efforts comporte sensiblement sous le niveau du plancher structural 10, une case 11 d'escamotage de la jambe 9 de l'atterrisseur 2.

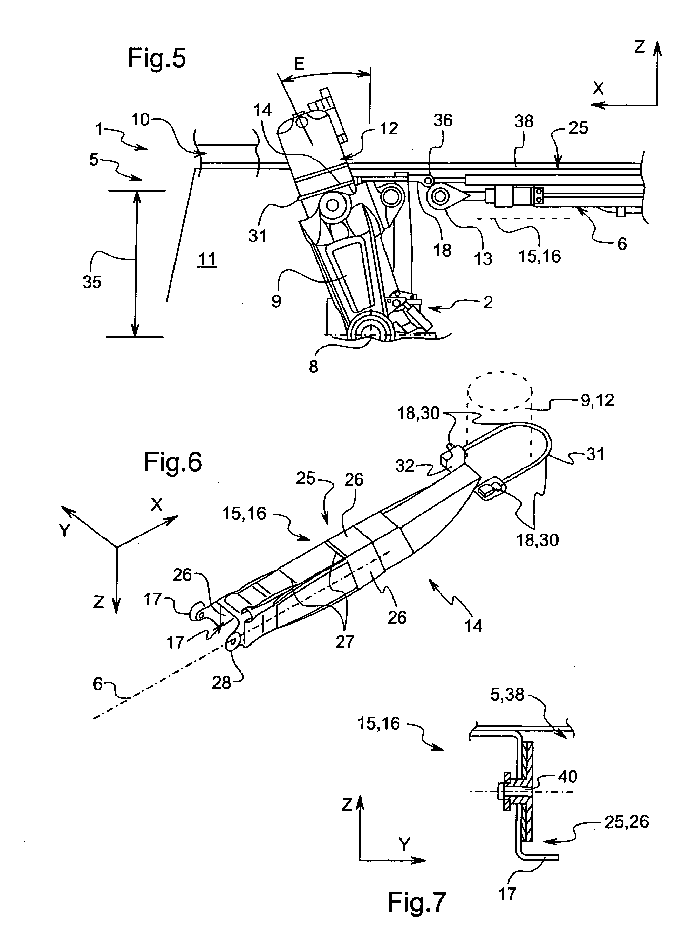

Avec un tel atterrisseur 2, à l'issue de la première phase de crash, une extrémité supérieure 12 de la jambe de train 9 vient comme illustré sur la figure 2 à proximité d'une paroi supérieure de la case 11 de train, en l'espèce le plancher structural 10. Ceci ressort aussi bien de la figure 5.

On n'a pas représenté les premiers moyens assurant ces fonctions anti-crash en première phase de crash, qui opèrent un amortissement de l'écrasement de l'atterrisseur 2 notamment. Typiquement, il s'agit d'un tube sécable à effort progressif et prédéterminé, par exemple en carbone.

En ce qui concerne le vérin de rétraction 6, on voit à la figure 3 qu'il est alors fonctionnellement désolidarisé de la jambe de train 9.

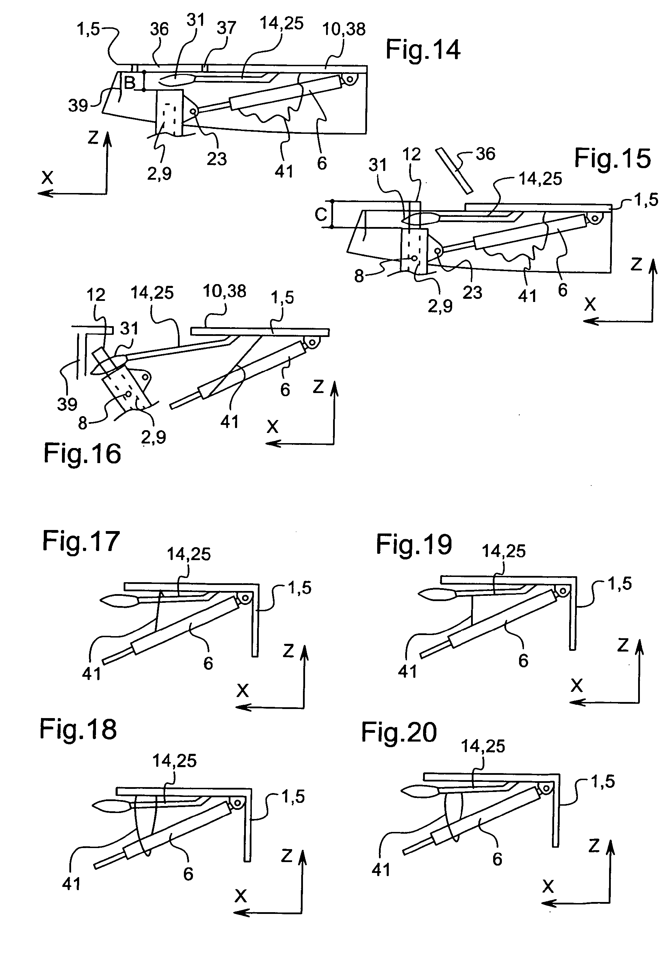

Sur la figure 14, on voit une distance d'élévation B entre le sommet suivant la direction Z de la jambe 9 de train et la face inférieure de la structure 5 (en l'instance une trappe 36 d'une paroi 38 du plancher 10). Cette distance B parcourue par l'extrémité 12 de la jambe 9 (en fait de son tube coulissant), lors de la première phase de crash, définit une course libre de coulissement de ce tube 12 avant qu'il ne percute la structure 5.

Sur la figure 15, on voit une autre distance d'élévation C entre le sommet suivant la direction Z de l'extrémité 12 en fin de coulissement, et sa position initiale avant coulissement. Cette distance C est parcourue par l'extrémité 12 lors de la première phase de crash. La distance C définit le parcours de coulissement total du tube 12 jusqu'en fin de course.

Dans des réalisations, une extrémité supérieure d'un tube coulissant de la jambe 9 de train provoque le cisaillement d'un verrou sécable placé en partie supérieure de cette jambe 9, ce qui libère un mécanisme de rétention en position fonctionnelle du vérin 6 de rétraction.

Typiquement, l'écrasement de la jambe 9 de train provoque à l'issue de la première phase de crash, le cisaillement d'un verrou sécable placé en partie supérieure 12 de l'atterrisseur 2.

Ceci libère un mécanisme de rétention du vérin 6 en position fonctionnelle. Dans un exemple, ce mécanisme de rétention est un crochet qui relie le vérin 6 et la partie supérieure 12 de la jambe 9 de train.

La jambe de train 9 est alors libre de pivoter autour de son axe transversal 8, typiquement sur une amplitude de l'ordre de 90°.

Ce pivotement constitue l'essentiel de la deuxième phase de crash. C'est alors que la jambe 9 de train séparée du vérin 6 tend à remonter violemment vers l'intérieur de l'aéronef 1, au-delà de sa case 11 d'escamotage.

Sous les effets combinés ici du relâchement de l'énergie de compression des pneumatiques des roues 4 ainsi que du bras de levier produit par le déport A, on constate en deuxième phase de crash, une accélération importante de la remontée de la jambe 9 de train.

Des dommages inacceptables risquent ainsi d'être provoqués lors de la deuxième phase de crash, à proximité de l'atterrisseur 2.

Des spécificités et avantages du train d'atterrissage 2 selon l'invention peuvent à la lumière de ce qui précède, être mieux comprises.

En termes de procédé, l'invention assure des fonctions embarquées par distinction avec des procédures existantes au sol tels que les barrières ou analogues.

Plus spécialement, afin d'obtenir une excellente sécurité anti-crash y compris en deuxième phase, on cherche à retenir dans une position idoine et à absorber l'énergie de pivotement de l'atterrisseur 2 lors de cette deuxième phase.

En effet, lorsque suite à sa désolidarisation de la jambe 9 de train, seule une extrémité 13 de raccord (figures 2 à 4) du vérin 6 reste articulée sur la structure de reprise 5, il convient d'éviter que ce vérin ne vienne entraver les fonctions anti-crash de l'atterrisseur 2 et donc la sécurité de l'appareil 1 et de ses occupants.

Donc suivant l'invention, lors de la deuxième phase de crash à l'issue de la première phase, on prévoit :
- d'une part une étape ou fonction spécifique de rétention du vérin 6 de rétraction fonctionnellement désolidarisé de la jambe de train 9, sensiblement dans une position effacée vis-à-vis de cette jambe 9 ; et
- d'autre part, on prévoit une étape ou fonction spécifique de freinage contrôlé du pivotement de la jambe 9 de train autour de son axe transversal 8.

Dans les exemples des figures 4 et 5, les étapes supplémentaires de rétention du vérin 6 en position effacée et de freinage contrôlé de la jambe 9 de train sont au moins en partie effectuées simultanément. Notons qu'en cas de pivotement libre avant freinage, la rétention est effective préalablement au freinage, dès la libération du vérin 6.

On peut même dire ici que ces étapes sont effectuées conjointement en parallèle, puisque le vérin 6 est constamment maintenu durant le freinage.

Dans la mise en oeuvre des figures 4, 5 et 11, l'étape de freinage du pivotement de la jambe 9 de train est au moins en partie assurée par une phase d'allongement contrôlé d'une liaison déformable 14 dont les caractéristiques structurelles sont décrites plus loin.

En fait dans les exemples, la phase d'allongement est entièrement assurée par la déformation de la liaison déformable 14, à effort sensiblement constant.

Selon les variantes des figures 4 à 10 (sangles), la phase d'allongement est au moins en partie opérée par au moins une action de destruction partielle permettant un déploiement contrôlé de la liaison déformable 14.

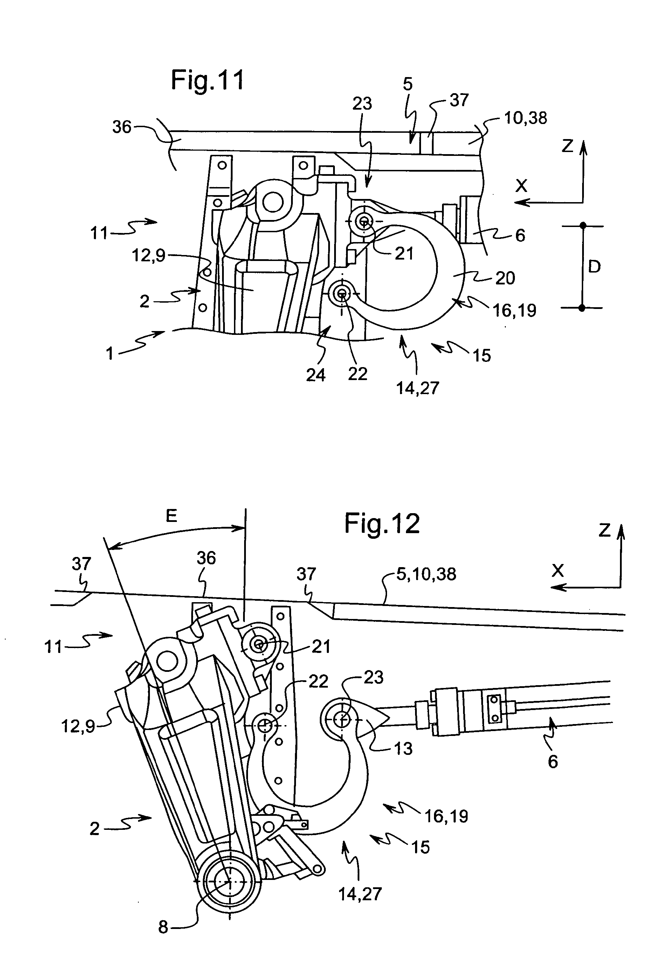

Par contre, selon la variante de la figure 11 (fer à cheval), la phase d'allongement est au moins en partie opérée par au moins une action de déformation plastique contrôlée de la liaison déformable 14.

Notons ici que dans ces variantes, avant l'étape de freinage du pivotement de la jambe 9 autour de l'axe 8, est assuré un pivotement libre avec une amplitude de l'ordre de 9°.

D'un point de vue matériel, l'invention propose un système 15 anti-crash, embarqué et prévu pour coopérer avec l'atterrisseur 2.

Ce système 15 comporte des moyens 16 anti-crash spécifiques à la deuxième phase de crash avec au moins :
- un dispositif de rétention du vérin 6 de rétraction sensiblement dans une position effacée (figure 5) par rapport à la jambe 9 de train ; et
- un dispositif de freinage contrôlé du pivotement de la jambe 9 de train autour de son axe transversal 8.

Notons que sur la figure 11, à ce stade, la position effacée correspond à la position normale de fonctionnement du vérin 6, qui reste lié matériellement à la jambe 9 de l'atterrisseur 2.

Selon les réalisations illustrées du système 15, les dispositifs de freinage et de rétention des moyens 16 sont au moins en partie formés par les mêmes constituants.

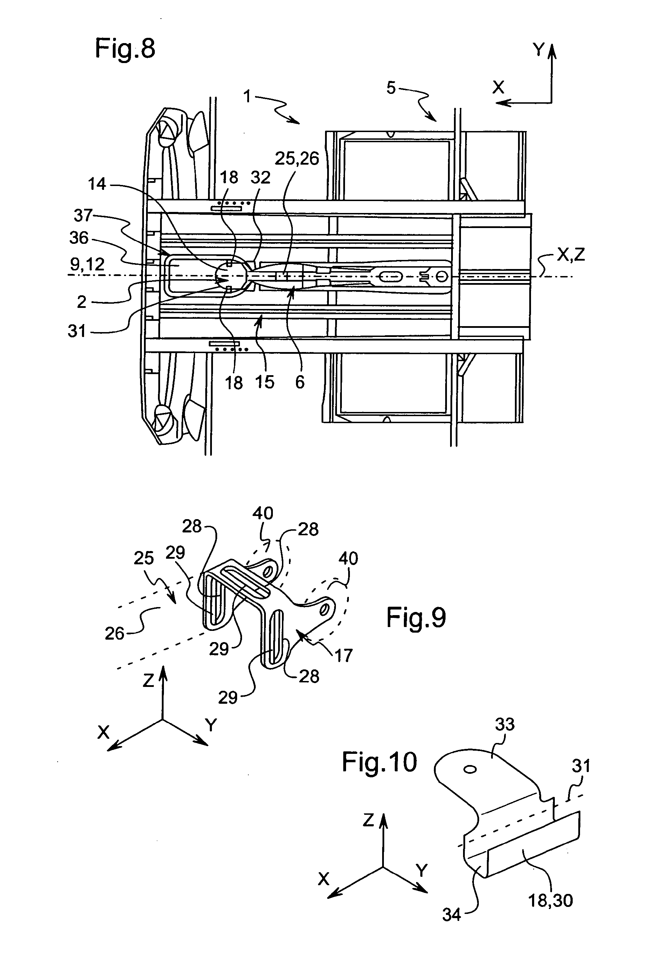

Ainsi en est-il des éléments de solidarisation arrière 17 (figure 9) et avant 18 (figure 10) qui font ainsi partie à la fois du dispositif de freinage et du dispositif de rétention des moyens 16. Ces éléments sont exposés en détail plus loin.

Plus spécialement, des réalisations de l'invention prévoient que les dispositifs de freinage et de rétention des moyens 16 sont confondus d'un point de vue structurel.

Dans des variantes non représentées, les dispositifs de freinage et de rétention des moyens 16 sont seulement en partie ou pas du tout intégrés l'un à l'autre.

Selon les réalisations illustrées, le dispositif de freinage des moyens anti-crash 16 possède au moins un organe de liaison 14 déformable par allongement contrôlé.

Dans les exemples des figures, chaque organe de liaison présente un allongement contrôlé à efforts sensiblement constants.

Par ailleurs, on comprend bien au vu de la figure 8 ou en imaginant une vue suivant la direction Z (c'est-à-dire une vue en plan transversal et longitudinal de dessus ou de dessous), que les moyens 16 (qu'il s'agisse de la réalisation avec des sangles ou avec un fer à cheval) sont de manière générale étendus sensiblement suivant la direction longitudinale X.

Tel est notamment le cas en position effacée au moins du dispositif de rétention et/ou dans une position de fin de course du dispositif de freinage.

Selon des réalisations de l'invention, le dispositif de freinage des moyens anti-crash 16 comporte des moyens de débattement libre par rapport à la structure de reprise 5.

Ces moyens de débattement laissent les moyens 16 libres sur une amplitude limitée en début de deuxième phase, c'est-à-dire avant le freinage de la jambe 9 de train.

Dans la réalisation illustrée sur la figure 12, de tels moyens de débattement laissent un pivotement libre E des moyens 16 sur une amplitude de l'ordre de 9°. Typiquement, l'amplitude totale de la jambe de train 9 autour de l'axe transversal 8 est dans ces réalisations, de l'ordre de 90°.

Sur la figure 11, les moyens anti-crash 16 possèdent un organe de liaison 19 unique, en forme de fer à cheval.

Cet organe ou pièce 19 en fer à cheval est déformable par allongement contrôlé sensiblement suivant la direction longitudinale X.

À cette fin, une partie centrale incurvée 20 de l'organe 19 en fer à cheval est apte à subir une action de déformation plastique contrôlée.

On voit sur la figure 11 que la partie incurvée déformable 20 de l'organe 19 en fer à cheval est étendue sensiblement dans le plan d'élévation longitudinale X, Z.

Également, l'organe 19 en fer à cheval est agencé entre deux articulations :
- une articulation mobile 21 solidaire d'une extrémité de liaison 23 du vérin 6 (c'est-à-dire indirectement à la structure de reprise 5); et
- une articulation fixe 22, montée sur une zone d'attache 24 à la jambe 9 de l'atterrisseur 2.

Bien sûr, le terme « fixe » doit être compris ici relativement à l'articulation 22 comme permettant une certaine rotation par rapport à la structure 5, par exemple durant des débattements libre et freiné.

Ces articulations 21 et 22 de l'organe 19 en forme de fer à cheval sont sensiblement étendues suivant la direction transversale Y, c'est-à-dire perpendiculairement au plan médian longitudinal de l'appareil 1.

Lors de son allongement, cette partie incurvée 20 s'étend suivant la direction longitudinale X par déformation plastique. Notons qu'alors, les efforts de freinage restent sensiblement linéaires tout au long de la déformation de la pièce 19 en fer à cheval.

De fait, son articulation mobile 21 sur le vérin de rétraction 6 s'éloigne alors relativement à son autre articulation fixe 22, cette dernière étant longitudinalement solidaire de la jambe 9.

De ce qui précède, on comprend bien que l'organe 19 en fer à cheval agit évidemment en tant que dispositif de freinage des moyens 16.

Mais cet organe 19 en fer à cheval assure la fonction de rétention également, du fait de la liaison 14 ici permanente mais déformable. La déformation de la liaison 14 est obtenue ici par rotation autour des articulations 21 et 22. La liaison 14 étant dans ce cas permanente, le maintien du vérin de rétraction 6 en position effacée s'effectue également par l'organe 19, qui fait ainsi office de dispositif de rétention autant que de freinage.

Dans une autre réalisation non représentée, un organe à déformation plastique comprend au moins une pièce en forme de tube ou coulisseau, apte à se déformer -tout comme l'organe 19, de façon irréversible- par extension.

De tels tubes peuvent être rencontrés dans des sièges anti-crash pour aéronef.

Sur les figures 2 à 10, le dispositif de freinage des moyens anti-crash 16 possède au moins un organe 25 de liaison déformable par une action de destruction partielle.

Cette action de destruction partielle permet un déploiement contrôlé de l'organe 25 de liaison déformable.

Dans l'exemple des figures 2 à 10, c'est à effort sensiblement constant, que cet organe 25 subit la déformation issue de sa destruction partielle.

Dans cet organe 25, seules des parties, à savoir des sangles 26 initialement lovées, sont aptes à subir l'action de destruction partielle permettant un déploiement contrôlé.

Selon cette réalisation, l'organe 25 comporte trois sangles 26, chacune lovée en au moins une série de boucles.

Selon les réalisations, on prévoit une ou plusieurs sangles, chacune étant éventuellement en série ou en parallèle.

Similairement, les boucles lorsqu'elles sont plusieurs au sein d'une sangle, sont agencées selon les besoins, en série ou en parallèle.

Les boucles des sangles 26 sont maintenues lovées de sorte que l'organe 25 présente avant crash, une dimension longitudinale correspondant à l'espacement suivant cette direction X entre le point d'ancrage 7 du vérin 6 de rétraction à la structure 5 et l'avant de la jambe de train 9 suivant la dimension longitudinale X.

On peut alors dire que l'organe 25 est dans un état compact, avec ses sangles 26 lovées en boucles.

Les boucles des sangles 26 sont maintenues lovées avant crash par des agencements 27 de retenue destructibles, visibles sur la figure 6.

Dans des exemples de l'invention, ces agencements 27 de retenue comportent :
- des coutures ; et/ou
- des encollages ; et/ou
- des soudages.

En deuxième phase de crash, le pivotement de la jambe 9 de train autour de son axe transversal 8 (suivant le sens trigonométrique sur les figures 2 à 5) provoque la destruction des agencements 27, et permet ainsi le déploiement contrôlé et progressif des sangles 26 de liaison.

Cette destruction des agencements 27 s'effectue au fur et à mesure que la jambe 9 de train pivote et ainsi tire sur l'organe 25.

Le déploiement des sangles 26 absorbe alors un surplus d'énergie en deuxième phase de crash, qui freine le pivotement de la jambe 9.

Ces sangles ont des propriétés prédéterminées assurant qu'en fin de course de la jambe 9 de train, l'énergie cinétique que la jambe 9 délivre aux structures connexes est compatible avec les impératifs de sécurité applicables à l'appareil 1 équipé selon l'invention.

De fait, les dommages matériels et/ou humains peuvent être limités voire rendus négligeables ou nuls.

Une particularité de la pièce en collet 31 qui forme l'avant de l'organe 25 de l'invention, est que ce collet 31 est agencée en piège (dit « snare » en anglais) pour la jambe 9 de train, lorsque le vérin 6 est fonctionnellement désolidarisé de cette jambe 9.

Sur les figures 2 à 5, cette position effacée est accolée à la paroi supérieure de la case 11 d'escamotage, et donc ici à proximité du -voire contre le- plancher structural 10.

II convient maintenant de préciser ce qui doit être entendu lorsqu'on dit le vérin 6 « fonctionnellement désolidarisé » de la jambe 9 de train. Cet état « fonctionnellement désolidarisé » est illustré aux figures 3-5, 12, 13, 15-20. Cet état ne s'oppose pas au fait que la liaison 14 soit permanente dans des réalisations. Il indique simplement qu'alors le vérin 6 n'est plus à même d'opérer les sorties / rétractions de la jambe 9.

Ainsi, en fonctionnement normal de l'aéronef 1, le vérin 6 est articulé par son extrémité de liaison 23 à la jambe 9 de train. Ceci lui permet d'assumer les fonctions de sortie et escamotage de l'atterrisseur 2.

On a vu qu'en fin de première phase de crash, cette extrémité de liaison 23 du vérin 6 subit une séparation par rapport à la jambe 9 de train.

Cependant, afin de pouvoir exercer en deuxième phase de crash sa fonction de freinage, l'organe 25 opère via le collet 31 une mise en prise avec la jambe 9.

Outre l'interposition de l'organe 25, un blocage s'opère à l'issue de la première phase, qui ne permet plus au vérin 6 d'exercer ses fonctions de sortie et escamotage de l'atterrisseur 2.

Typiquement, ce blocage s'obtient par interruption des flux fonctionnels dans le vérin 6, qui est alors immobilisé en extension et contraction, dans l'état où il se trouvait à l'issue de la première phase.

Par contre, la liaison 14 entre l'organe 25 et la jambe 9 autorise à cette dernière (9) un certain nombre de degrés de liberté incompatibles avec un escamotage normal, et permet les fonctions spécifiques à la deuxième phase de crash, à savoir notamment les freinage de la jambe 9 et rétention du vérin 6 en position effacée par l'organe 25.

Concernant cette rétention en position effacée du vérin 6, notons que dans une version non représentée de l'organe 25, mais comparable à celle de la figure 6, les sangles 26 forment un berceau destiné à assumer au moins en partie la fonction de rétention prévue à la deuxième phase de crash.

De fait, tant en fonctionnement normal de l'aéronef 1 qu'en cas de crash, les sangles 26 en berceau restent étendues à proximité du vérin 6 de rétraction.

Ainsi, on assure le confinement du vérin 6 dans un espace où il ne peut interférer avec d'autres composants de l'aéronef 1 et en altérer le fonctionnement.

Plus généralement, l'organe 25 de liaison comporte sur la figure 6 plusieurs sangles 26 agencées en berceau et disposées en « U » suivant un plan perpendiculaire à la direction X, c'est-à-dire un plan transversal (Y, Z).

Sur les figures 5 et 6, l'organe 25 en berceau en « U » renversé comporte trois sangles 26 :
- une sangle 26 centrale transversalement et agencée sensiblement dans un plan (X, Y) longitudinal et transversal ; et
- deux sangles 26 latérales, formant les branches du « U » et agencées de part et d'autre de la sangle 26 centrale, sensiblement symétriquement par rapport au plan médian d'élévation longitudinale déjà évoqué.

D'une part longitudinalement, les trois sangles 26 en « U » sont montées sur l'élément de solidarisation arrière 17 à la structure 5 de reprise.

D'autre part, ces sangles 26 sont montées sur l'élément 18 de solidarisation à la structure 5, vers l'avant et donc à proximité du sommet de la jambe 9 de train.

Dans cette réalisation, l'organe 25 est monté par fixation des éléments 17 et 18 sous une paroi supérieure 38 de la case 11 de train. L'élément arrière 17 est ainsi rigidement fixé à la structure 5 de reprise, en permanence y compris durant la deuxième phase de crash.

Notons ici qu'une sangle 26 centrale est contre la paroi 38 et au dessus du vérin 6. Les deux sangles 26 latérales sont de part et d'autre de ce vérin 6, le berceau en « U » étant ici à l'envers.

Par contre, on verra que lors de cette deuxième phase de crash, des réalisations prévoient que les éléments avant 18 comportent des attaches 30 à rupture contrôlée.

Ces attaches 30 sont agencées pour qu'après la capture de la jambe 9 par le collet 31, les éléments avant 18 se détachent de la structure 5 (e.g. de la paroi 38), autorisant ainsi un alignement de la liaison 14 suivant la direction principale des efforts de freinage. Ceci ressort bien des figures 15 et 16.

Sur la figure 9, on voit que l'élément arrière 17 forme une ferrure d'articulation sur la structure 5. Ce élément 17 ou ferrure présente lui aussi une section en « U » suivant le plan transversal (Y, Z).

Les sangles 26 sont articulées dans des lumières 28 de rebroussement de l'élément 17. Chaque sangle 26 est passée librement dans l'une de ces lumières 28, y subit un rebroussement et est attachée sur elle-même afin que son maintien sur l'élément 27 soit solide et permanent.

On remarque que dans chaque lumière 28, est serti un boudin raidisseur 29, par exemple revêtu d'une couche glissante telle que les résines fluor carbone dont le PTFE (polytétrafluoroéthylène) ou le FEP (éthylène propylène fluoré).

Ces boudins raidisseurs 29 ont notamment pour fonction de participer à l'encaissement par l'élément 27 des efforts importants en deuxième phase de crash et de limiter l'usure des sangles 26 au passage dans les lumières 28.

En se reportant à la figure 7, on voit le montage de l'élément avant 17 en ferrure sur la structure 5.

Cet élément 17 est rigidement solidaire en fonctionnement normal de l'aéronef 1, via des axes 40 agencés transversalement, d'orientation de l'organe 25 par rapport à la structure 5 de reprise.

Contrairement à l'élément 18 avant, l'élément 17 ne possède pas d'attaches 30 à rupture contrôlée. En effet, seul l'avant de la liaison 14 à sangles 26 se détache de la structure 5 en deuxième phase de crash.

Ce détachement autorise par contre l'orientation par rotation de l'élément 17 autour des axes 40. Sur les figures 15 et 16, cette orientation de l'organe 25 est opérée suivant le sens trigonométrique, c'est-à-dire de sorte que l'avant de l'organe 25 s'éloigne de la paroi 38 en élévation vers le bas, de par sa rotation.

En deuxième phase de crash, ces attaches 30 se rompent pour partiellement libérer l'organe 25.

Par cette libération partielle, l'organe 25 est autorisé à rester à proximité de sa position effacée initiale, mais -comme visible sur la figure 4 ou 16- subit sous l'effet de la traction générée par le pivotement de la jambe 9, un faible déplacement de haut en bas autour de son point d'ancrage 7 (e.g. via l'élément arrière 17) à la structure 5.

Ainsi, l'organe 25 reste sensiblement orienté suivant la direction des efforts principaux qu'il subit. Ceci permet d'assurer une résistance accrue de cet organe 25, alors sollicité principalement en traction, avec des efforts parasites réduits du fait de sa libération partielle.

Sur les figures 2 à 6, chacune des trois sangles 26 sont montées à l'avant sur l'élément 18 et à l'arrière sur l'élément 17, et sont solidaires via le support 32 transversal, de la pièce 31 en forme de collet.

Dans les exemples illustrés, cette pièce 31 en collet est réalisée en acier à très haute teneur, tel qu'un acier de type Z15CM17.03.

Plus généralement, on voit bien sur les figures 6 et 8 que l'organe 25 possède à l'avant des sangles 26, suivant la direction longitudinale :
- une pièce 31 en forme de collet, disposée au sein de l'atterrisseur 2, (au dessus du sommet de la jambe 9 de train avant le deuxième phase de crash / autour de ce sommet que la pièce 31 entoure lors de la deuxième phase) ;
- un support transversal 32 reliant chaque extrémité longitudinale libre de la pièce 31 en collet ; et
- de part et d'autre transversalement du support 32, ainsi que dans un tronçon longitudinal de chaque branche de la pièce 31, un élément 18 de fixation à la structure 5.

Sur la figure 8, quatre éléments 18 retiennent l'avant de l'organe 25, deux de chaque côté transversalement.

Sur la figure 10, un des éléments 18 est en forme de patte avec une languette latérale 33, d'où est étendue une gouttière 34 dans laquelle vient se loger en état normal -hors crash-, la pièce 31 en collet. Ici, chaque élément avant 18 forme une attache 30 à rupture contrôlée.

Les attaches 30 maintiennent ainsi en état normal de l'aéronef 1, la pièce 31 en collet contre la structure 5 et au dessus de la jambe 9 de train, ici contre la paroi 38 de sommet de la case 11 de train.

Ces attaches 30 étant à rupture contrôlée, elles permettent en deuxième phase de crash, le relâchement de la pièce 31 en collet relativement à la structure 5. A cette fin, les attaches 30 sont par exemple réalisées en matériau composite, notamment en carbone ou analogues, pour que leur cassure soit nette et franche.

En fait, les attaches 30 des éléments avant 18 sont destinées à maintenir l'organe 25, provisoirement jusqu'en deuxième phase de crash.

Le but est de minimiser l'encombrement du système 15 anti-crashs en fonctionnement normal de l'aéronef 1. Ceci permet aussi d'éviter les interférences entre ce système 15 et le train 2, toujours en fonctionnement normal.

Notons ici que dans la réalisation de la figure 5, la pièce en collet 31 de l'organe 25 de freinage possède une zone de capture (à l'intérieur de la pièce 31 en collet) de la jambe 9 de train à l'issue de la première phase de crash.

Cette zone de capture étant située à une distance prédéterminée 35 en élévation, et sensiblement constante (hormis l'orientation) au-dessus de l'axe transversal 8, on comprend que la mise en prise de la liaison 14 à sangles 26 et collet (31) nécessite la remontée d'une extrémité supérieure de la jambe 9. En effet, l'axe 8 n'est pas sensé bouger au sein de la structure 5 lors d'un crash à pallier par le système 15.

Dans cette réalisation, en deuxième phase de crash, l'extrémité supérieure 12 de la jambe 9 de train est à proximité d'une trappe 36 amovible de la paroi supérieure 38.

À l'issue de la première phase de crash, cette trappe 36 amovible est percutée par l'extrémité supérieure 12 de la jambe 9. Comme illustré sur la figure 8, cette trappe 36 amovible est entourée par une zone 37 de fragilité contrôlée.

Par exemple, cette zone 37 possède des rivets et/ou collages dont la tenue est prédéterminée pour assurer une désolidarisation de la trappe 36 relativement au reste du plancher 10 (i.e. de la paroi 38) quand l'extrémité 12 la heurte.

Ceci autorise après l'effacement de la trappe 36 amovible, le passage de cette extrémité 12 de la jambe 9 à travers la paroi 38 et la pièce 31 en collet. La mise en prise de la liaison 14 à sangles 26 et de la jambe 9 est alors effectuée, suite à cet effacement.

La paroi supérieure 38 est selon les réalisations, une partie inférieure du plancher 10 structural, de sommet de la case 11 de train, ou analogues.

À ce stade, reprenons des exemples du procédé conforme à l'invention.

Dans une mise en oeuvre, lors d'une deuxième phase de crash à l'issue de la première phase, ce procédé assure au moins les étapes ou fonctions supplémentaires suivantes de :
- désolidarisation fonctionnelle de la jambe 9 de train par rapport au vérin 6 de rétraction ;
- rétention et blocage du vérin 6 de rétraction ; et
- une fois le vérin 6 bloqué, freinage contrôlé du pivotement de la jambe 9 de train autour de son axe 8 transversal.

Dans toutes les mises en oeuvre, l'étape de freinage du pivotement est au moins en partie assurée par une phase d'allongement irréversible d'une liaison 14 déformable entre la structure 5 de reprise et la jambe 9 de train, par exemple à effort sensiblement constant.

Dans la cas d'une liaison 14 à sangles 26 et collet (31) la phase d'allongement est au moins en partie opérée par au moins une action de destruction partielle permettant une extension contrôlée de la liaison 14 déformable. Cette liaison 14 est directe entre la structure 5 de reprise et la jambe 9 de train.

Dans le cas d'une liaison 14 à une ou plusieurs pièces 19, la phase d'allongement est au moins en partie opérée par une action de déformation plastique permettant un déploiement contrôlé de la liaison 14 déformable. Cette liaison 14 est indirecte entre la structure 5 de reprise et la jambe 9 de train, et comporte une fonction de renvoi exercée par le vérin 6, entre la structure 5 et la jambe 9.

Dans le cas des sangles 26, la phase d'allongement est opérée par une phase d'extension par destruction des agencements 27. Cette destruction est partielle, la liaison 14 reliant aux fins de son freinage, la jambe 9 à la structure 5.

Cependant, la liaison 14 est impermanente entre la structure 5 et la jambe 9, puisqu'elle est obtenue par interposition provoquée de l'organe 25 de cette liaison 14 avant la deuxième phase de crash.

Les figures 14 à 16 montrent comment l'interposition provoquée de cette liaison 14 avant la deuxième phase de crash, est réalisée par mise en prise lors de la première phase, du tube 12 coulissant dans la jambe 9 (et qui en forme alors l'extrémité supérieure), avec un collet 31.

Quand la liaison 14 prévoit (au moins) une pièce 19 en fer à cheval, la phase d'allongement est au moins en partie opérée par une phase de déploiement de cette liaison 14. Ici, la liaison 14 est permanente entre la structure 5 et la jambe 9, au sens où elle relie matériellement la jambe 9 à la structure 5, via le vérin 6, autant en fonctionnement normal, qu'en première ou deuxième phase de crash.

Toutefois, on a vu qu'en deuxième phase de crash, le vérin 6 bloqué n'était plus retenu à la jambe 9 que par la liaison 14.

Dans l'exemple des figures 11 à 13, cette liaison 14 opère durant la deuxième phase de crash, un basculement de la ou des pièces 19 interposées entre la jambe 9 de train et le vérin 6 de rétraction, ce vérin 6 restant articulé sur la jambe 9.

Dans plusieurs mises en oeuvre, un pivotement libre E de la jambe 9 avant son freinage est assuré. Selon les cas, ce pivotement libre E présente une amplitude prédéterminée comprise entre 1° et 30°.

Sur la figure 12, ce pivotement libre E avant freinage par la pièce 19 en fer à cheval est de l'ordre de 22° pour une amplitude totale de la jambe 9 l'ordre de 90°. Sur la figure 5, ce pivotement libre E avant freinage par l'organe 25 à sangles 26, est de l'ordre de 9°. Mais dans des réalisations, ce pivotement libre E de la jambe 9 est seulement de l'ordre de quelques degrés et/ou est ajustable.

Il ressort des figures 16, 4 et 14 que l'étape de freinage de la jambe 9 autour de l'axe 8 transversal, est dans des réalisations, en partie assurée par mise en contact de la jambe 9 avec un butoir 39. Ce butoir 39 opère une absorption d'énergie de crash en deuxième phase de crash.

Typiquement en fin de course freinée de la jambe 9, le butoir 39 subit une déformation plastique opérée par l'entrée en contact de la jambe 9. Dans les exemples illustrés, c'est le tube 12 coulissant d'extrémité supérieure de la jambe 9 qui vient déformer le butoir 39. Ici, le butoir 39 comprenant une paroi avant 39 de la case 11 d'escamotage du train 2 en fin de deuxième phase de crash.

Préalablement, lors de la première phase de crash, cette extrémité supérieure 12 en forme de tube, coulisse sensiblement de bas en haut. Du fait de ce coulissement, l'extrémité supérieure 12 de la jambe 9 vient percuter une trappe 36 entourée par une zone 37 à déboutonner d'une paroi 38 supérieure d'une case 11 d'escamotage du train 2.

Ainsi percutée, l'extrémité supérieure 12 vient désolidariser cette zone 37 du reste de la paroi 38 supérieure, mais sans absorption notable d'énergie. Dès lors, on ne peut pas considérer la trappe 36 comme faisant partie des moyens anti-crash.

Par ailleurs, on voit bien sur la figure 15 que la désolidarisation fonctionnelle de la jambe 9 par rapport au vérin 6 de rétraction, est effectuée par séparation. Ici, un verrou sécable est cisaillé lors de l'écrasement de la jambe 9 en première phase de crash. Ceci libère un mécanisme de rétention ou rétention en position fonctionnelle du vérin 6. De la sorte, l'extrémité 23 de liaison du vérin 6 est détachée matériellement de la jambe 9.

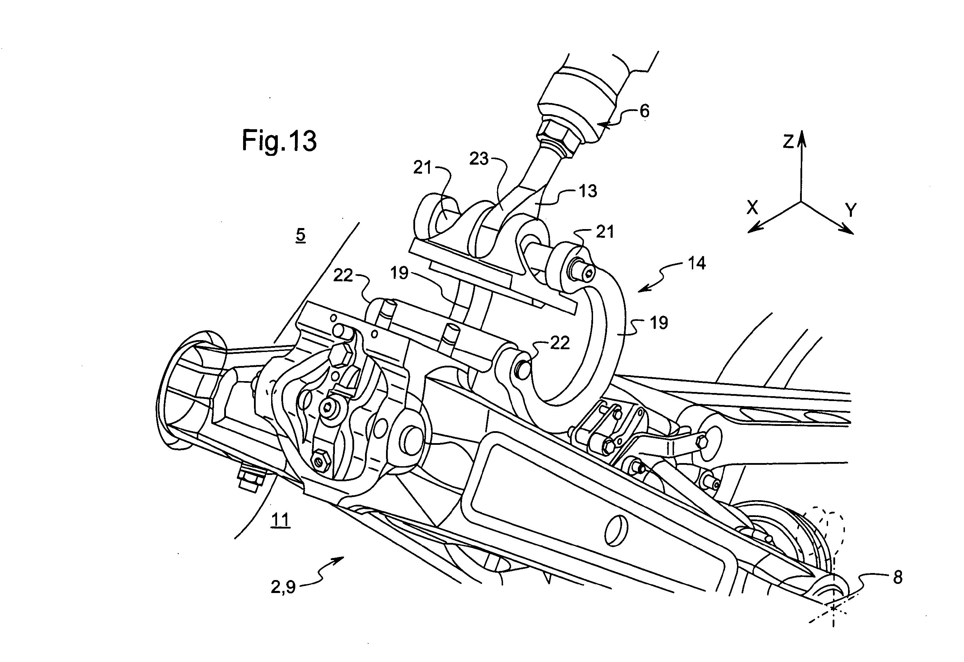

Par contraste, sur les figures 12 et 13, on voit que la désolidarisation fonctionnelle de la jambe 9 de train par rapport au vérin 6 de rétraction, est effectuée par basculement sans véritable séparation matérielle. Ici, la liaison 14 est permanente et indirecte.

Pour obtenir le basculement du ou des pièces 19, un verrou sécable est cisaillé par l'écrasement de la jambe 9. Ceci libère un mécanisme de rétention en position fonctionnelle du vérin 6 et l'extrémité 23 de liaison du vérin 6 est relâchée par rapport à la jambe 9. Contrairement aux versions à interception, l'articulation 22 fixe permet le basculement de la liaison 14, sans séparation matérielle complète de la jambe 9 et du vérin 6.

Notons que ce basculement est opéré jusqu'à une position d'alignement des extrémités de liaison 23 et fixe 22 du vérin 6 avec une zone 24 d'attache de la liaison 19 permanente sur la jambe 9.

Dans nombre de mises en oeuvre, les étapes de rétention du vérin 6 en position effacée et de freinage contrôlé de la jambe 9 de train sont au moins en partie effectuées simultanément, voire conjointement en parallèle. Notons qu'en général, l'étape de rétention intervient dès la désolidarisation fonctionnelle du vérin 6, qu'il y ait alors freinage ou pas.

Maintenant, observons des réalisations du système 15 anti-crashs pour un atterrisseur 2 à embarquer sur un aéronef 1.

Ce système 15 comporte au moins :
- des premiers moyens anti-crash agencés pour assurer un amortissement de l'écrasement de l'atterrisseur 2, lors d'une première phase de crash ; et
- des deuxièmes moyens 16 anti-crash, agencés pour assurer l'inhibition de la rétraction, ainsi que le freinage du pivotement de la jambe 9, lors d'une deuxième phase de crash.

Dans les mises en oeuvre illustrées, le système 15 selon l'invention comprend au moins :
- des moyens de désolidarisation fonctionnelle de la jambe 9 de train par rapport au vérin 6, à l'issue de la première phase de crash ;
- au sein des deuxièmes moyens 16 anti-crash, des dispositifs de rétention et de blocage du vérin 6 ; et
- au sein des deuxièmes moyens 16 anti-crash, un dispositif 19, 25 de freinage contrôlé du pivotement de la jambe 9 de train, distinct du vérin 6 de rétraction.

Bien sur, le système 15 est apte à mettre en oeuvre le procédé exposé plus haut.

Comme sur la figure 15, les moyens de désolidarisation fonctionnelle de la jambe 9 sont des moyens de séparation distincts de la liaison 14, 25.

Bien que cela ne soit pas représenté, suivant cet exemple ces moyens de désolidarisation fonctionnelle comportent notamment :
- un verrou sécable à cisailler ; et
- un mécanisme de rétention en position fonctionnelle.

Dans la mise en oeuvre de la figure 12 ou 13, les moyens de désolidarisation fonctionnelle de la jambe 9 comportent, outre les verrou et mécanisme de rétention évoqués, le ou les organes 19 de basculement de la liaison 14 permanente.

L'activation de ces les moyens de désolidarisation fonctionnelle aboutit à ce que l'extrémité 23 du vérin 6 est relâchée par rapport à la jambe 9. Alors l'articulation 22 dite fixe permet le basculement de la liaison 14 permanente, jusqu'à la position d'alignement déjà exposée.

Cet alignement sensiblement suivant la direction longitudinale X mérite d'être rapproché de la distance D visible sur la figure 11.

II ressort en effet sur cette figure 11 qu'il existe en position de fonctionnement normal de l'atterrisseur 2, une telle distance D étendue sensiblement en élévation suivant Z, entre les articulations 21 mobile et 22 dite fixe.

Comme visible sur la figure 12, à l'issue de la première phase de crash, une fois le vérin 6 fonctionnellement désolidarisé, cette distance est nettement amoindrie voire disparue, du fait des basculement et alignement de la liaison 14 à pièce 19 en fer à cheval.

Concernant le dispositif de rétention, on a vu qu'il est agencé pour que le vérin 6 soit maintenu sensiblement dans une position effacée vis-à-vis de la jambe 9. Ce dispositif de rétention est solidarisé à la structure 5 de reprise.

Selon les mises en oeuvre, le dispositif de rétention est directement solidarisé à la structure 5 de reprise.

Ainsi sur la figure 17, ce dispositif comporte un brin 41 unique, rigidement fixé par l'une de ses extrémités à une paroi 38 de la structure telle qu'un plancher 10, tandis que l'autre de ses extrémités est rigidement fixée au vérin 6.

Sur la figure 18, le dispositif de rétention comporte aussi un brin 41 unique, mais rigidement fixé à chacune de ses extrémités à la structure 5 pour former un berceau en chaînette où repose le vérin 6.

Dans d'autres mise en oeuvre, le dispositif de rétention indirectement solidarisé à la structure 5 de reprise, par l'intermédiaire d'un dispositif 25 de freinage.

Ainsi, sur la figure 19, l'une des extrémités du brin 41 est rigidement fixée au dispositif 25 de freinage, tandis que son autre extrémité est rigidement fixée au vérin 6.

Par contre, sur la figure 20 chacune des extrémités du brin 41 est rigidement fixée au dispositif 25 de freinage, ce brin 41 formant berceau en chaînette où repose le vérin 6.

Selon des exemples, un tel brin 41 est intégré à un dispositif 25 de freinage à sangles 26.

Évoquons maintenant le dispositif de blocage du vérin 6.

Dans une mise en oeuvre, le dispositif de blocage fait partie des premiers moyens anti-crash. Typiquement, ce dispositif est intégré à ce vérin 6. Pour assurer son déclenchement dans les cas de nécessité, le dispositif de blocage est souvent relié à au moins un capteur de vitesse et/ou d'intégrité du système et/ou d'efforts appliqués au train 2.

Lorsqu'une valeur prédéterminée est atteinte par la mesure de ces capteurs, le dispositif de blocage provoque le blocage du vérin 6 de rétraction, dans la position ou état où il se trouve.

Évoquons maintenant le dispositif de freinage.

Dans les mises en oeuvre illustrées, que ce dispositif de freinage comporte un organe 19 ou 25, est solidarisé d'une part à la structure 5 de reprise et d'autre part à la jambe 9 de train, par exemple à une zone 24 d'attache ou à un tube 12 coulissant.

La solidarisation à la structure 5 est soit directe soit indirecte.

On a déjà vu que dans des mises en oeuvre, les dispositifs de freinage et de rétention sont en partie formés par les mêmes constituants. Un cas où ces dispositifs de freinage et de rétention sont confondus, tous les deux formés de sangles, a même été évoqué bien qu'il ne soit pas illustré.

Une possibilité offerte par l'invention prévoit que les dispositifs de freinage et de rétention, voire plus généralement l'ensemble des deuxièmes 16 moyens anti-crash, sont dénués de constituants pneumatique, hydraulique ou électrique tels que commande et/ou asservissement.

Il ressort en effet des figures 2 à 20, que les exemples illustrés de dispositifs de freinage et de rétention sont entièrement mécaniques.

Dans la plupart des mises en oeuvre, l'un au moins des dispositif de freinage et/ou de rétention est étendu sensiblement suivant la direction longitudinale X, du moins lors de certaines étapes ou phases de fonctionnement du système 15.

Par exemple en position effacée comme sur la figure 14, le dispositif 25 de freinage à sangles 26 est étendu sensiblement suivant la direction longitudinale X.

Également, le dispositif de freinage à organe 19 est en position de fin de course, étendu sensiblement suivant la direction longitudinale X, cet organe 19 assurant aussi ici, la rétention du vérin 6.

Dans l'ensemble des mises en oeuvre illustrées, le freinage réalisé par les deuxièmes moyens 16 anti-crash, implique une déformation irréversible par allongement contrôlé, à effort sensiblement constant.

Sur les figures 2 à 10 et 14 à 20, le ou les organes 25 de liaison 14 sont du type à allongement par destruction partielle. Cet allongement permet une extension contrôlée de la liaison 14 déformable, qui est d'ailleurs directe entre la structure 5 de reprise et la jambe 9 de train dans ces exemples.

Une telle liaison 14 déformable est impermanente entre la structure 5 et la jambe 9, puisqu'elle est effective seulement quand le tube 12 d'extrémité est interposé.

En étant ainsi interposé par les premiers moyens anti-crash, ce tube 12 assure la mise en prise de la jambe 9 avec un collet 31 ou analogues du dispositif de freinage à sangles 26.

Par contraste, sur les figures 11 à 13, chaque organe 19 d'une liaison 14 est du type à allongement par déformation plastique contrôlée. Cette déformation irréversible permet un déploiement contrôlé de la liaison 14.

Cette dernière est ici indirecte, entre la structure 5 de reprise et la jambe 9 de train, et comporte un constituant -le vérin 6- de renvoi d'efforts de crash depuis la jambe 9 vers la structure 5.

La liaison 14 déformable est sur les figures 11 à 13 permanente entre la structure 5 et la jambe 9. On a bien compris que le basculement du ou des organes 19 en fer à cheval entre la jambe 9 de train et le vérin 6 de rétraction, n'opère pas de discontinuité mécanique. En effet, le vérin 6 qui assure le renvoi, reste constamment articulé sur la jambe 9 même en cas de crash.

Ne revenons pas plus avant sur le fait que les moyens 16 anti-crashs spécifiques comportent des moyens de débattement libre de la jambe 9 par rapport à la structure 5. Ce débattement E est en général libre sur une amplitude limitée de début de deuxième phase avant freinage, par exemple de l'ordre de 1° à 30°.

Il en va de même du butoir formé par la paroi avant 39 d'absorption d'énergie de crash en deuxième phase de crash.

Sur la figure 13, la liaison 14 comprend non pas une mais deux pièces 19, chacune en forme de fer à cheval.

Chaque pièce 19 est apte à se déformer par linéarisation irréversible. Ces deux pièces 19 en forme de fer à cheval sont agencées de part et d'autre d'un plan médian X, Z d'élévation longitudinale, de manière symétrique.

Un pareil agencement facilite le calcul des pièces 19 et limite les mouvements parasites de la jambe 9 de train autour de sa direction longitudinale, c'est-à-dire les départs en vrille.

Par comparaison, la pièce 19 unique en forme de fer à cheval de la figure 11 est agencée sensiblement dans un plan médian X, Z d'élévation longitudinale.

Chaque pièce 19, qu'elle soit unique ou double, comporte d'une part une articulation mobile 21 liée à une extrémité 23 de liaison du vérin 6 et d'autre part une articulation 22 liée à une zone 24 d'attache à la jambe 9.

Toutes ces articulations 21, 22 des pièces 19 en forme de fer à cheval sont sensiblement étendues suivant la direction transversale Y.

Dans des réalisations non représentées, la liaison 14 comprend au moins une pièce en forme de tube, apte à se déformer par rétraction irréversible.

On voit sur la figure 6 que chaque sangle 26 est lovée en au moins une série de boucles, qui sont maintenues lovées par des agencements 27 de retenue destructibles.

Selon les réalisations, ces agencements 27 comportent des coutures et/ou un encollage et/ou soudage. Leur destruction permet un déploiement contrôlé et progressif de la sangle 26 de la liaison 14.

Dans une réalisation non illustrée, le jeu de sangles 26 est agencé à proximité d'une partie inférieure du vérin 6 et dessine ici aussi un « U », mais avec ses branches libres vers le haut (non renversé).

Plus en détails, un tel organe 25 comporte ici trois sangles 26 en berceau disposées en « U », avec :
- une sangle 26 de fond centrale transversale ; et
- deux sangles 26 latérales.

La sangle 26 centrale du berceau en « U » est disposée en dessous du vérin 6, et les sangles 26 latérales s'étendant de part et d'autre de ce vérin 6. Ici, le berceau en « U » est donc agencé avec ses branches libres vers le haut.

Ces sangles 26 sont articulées dans des lumières 28 de rebroussement, chacune par ses extrémités longitudinales d'une part de la ferrure 17 d'articulation arrière sur la structure 5 et d'autre part des éléments 18 de maintien provisoire de l'avant de l'organe 25 contre le plancher 10.

Sur la figure 6, les éléments 18 de solidarisation sont à rupture contrôlée, destinées à maintenir un collet 31 avant d'encerclement de la jambe 9 de train, provisoirement jusqu'en deuxième phase de crash.

Il ressort des figures que le système 15 équipe un atterrisseur 2 droit et escamotable autour de l'axe 8 transversal.

Également, il est clair que ce système 15, équipe l'aéronef 1 qui est à voilure tournante sur la figure 1.

Sur les figures 5 et 12, la structure 5 de reprise de l'aéronef 1 comporte une paroi 38 avec la trappe 36 à déboutonner, qui est entourée de la zone 37 fragilisée.

Par ailleurs, l'aéronef 1 possède sur les figures 3 et 16, une structure 5 de reprise avec un butoir 39 d'absorption d'énergie de crash en fin de deuxième phase de crash, ici une paroi avant 39 de la case 11 du train 2.

Enfin, notons que l'invention s'applique à divers types d'aéronefs 1, et non seulement à des appareils à voilure tournante. Ainsi, l'invention peut être appliquée à des avions, ballons ou autres véhicules aériens.

## Revendications

1. Procédé embarqué anti-crash pour un atterrisseur (2) d'aéronef (1) par exemple à voilure tournante, cet atterrisseur (2) de type escamotable, prévoyant au moins :
- une jambe (9) de train articulée sur une structure de reprise d'efforts de l'aéronef (1) autour d'un axe (8) transversal de pivotement, afin de permettre ses sorties et escamotages ;
- un vérin (6) de rétraction avec une extrémité de raccord articulée sur la structure de reprise, afin de provoquer les sorties et escamotages de la jambe (9) de train ;
- des premiers moyens anti-crash, afin d'assurer en première phase de crash une fonction d'amortissement de l'écrasement de l'atterrisseur (2) ; et
- des deuxièmes (16) moyens anti-crash, afin d'assurer en deuxième phase, des fonctions d'inhibition de la rétraction, ainsi que de freinage du pivotement de la jambe (9) ;
**caractérisé en ce que**, lors d'une deuxième phase de crash à l'issue de la première phase, ce procédé assure au moins les étapes ou fonctions supplémentaires suivantes de :
- désolidarisation fonctionnelle de la jambe (9) de train par rapport au vérin (6) de rétraction ;
- rétention et blocage du vérin (6) de rétraction ; et
- une fois le vérin (6) bloqué, freinage contrôlé du pivotement de la jambe (9) de train autour de son axe (8) transversal.

2. Procédé selon la revendication 1,
**caractérisé en ce que** l'étape de freinage du pivotement est au moins en partie assurée par une phase d'allongement irréversible d'une liaison déformable (14, 19, 25) entre la structure (5) de reprise et la jambe (9) de train, par exemple à effort sensiblement constant.

3. Procédé selon la revendication 2,
**caractérisé en ce que** la phase d'allongement est au moins en partie opérée par au moins une action de destruction (27) partielle permettant une extension contrôlée de la liaison (14, 25) déformable, par exemple cette liaison (14, 25) est directe entre la structure (5) de reprise et la jambe (9) de train.

4. Procédé selon la revendication 2 ou 3,
**caractérisé en ce que** la phase d'allongement est au moins en partie opérée par au moins une action de déformation plastique permettant un déploiement contrôlé de la liaison (14, 19) déformable, par exemple cette liaison (14, 19) est indirecte entre la structure (5) de reprise et la jambe (9) de train, et comporte une fonction de renvoi (6) entre la structure (5) et la jambe (9).

5. Procédé selon l'une des revendications 2 à 4,
**caractérisé en ce que** la phase d'allongement est au moins en partie opérée par une phase d'extension (25) par destruction (27) partielle d'une liaison (14) impermanente entre la structure (5) et la jambe (9), par exemple cette liaison (14) est obtenue par interposition provoquée d'un organe (25,31) de cette liaison (14) avant la deuxième phase de crash.

6. Procédé selon la revendication 5,
**caractérisé en ce que** l'interposition provoquée de cette liaison (14) avant la deuxième phase de crash, est réalisée par mise en prise lors de la première phase, d'un tube (12) coulissant dans la jambe (9) de train avec un collet (31) ou analogues.

7. Procédé selon l'une des revendications 2 à 6,
**caractérisé en ce que** la phase d'allongement est au moins en partie opérée par une phase de déploiement (19) d'une liaison (14) permanente entre la structure (5) et la jambe (9), par exemple cette liaison (14, 19) actionne un basculement entre la jambe (9) de train et le vérin (6) de rétraction, ce vérin (6) restant articulé sur la jambe (9) durant la deuxième phase de crash.

8. Procédé selon l'une des revendications 1 à 7,
**caractérisé en ce que**, un pivotement libre (E) de la jambe (9) avant son freinage est assuré avec une amplitude prédéterminée, par exemple comprise entre 1° et 30°, notamment de l'ordre de 9° ou 22° dans le cas d'une amplitude totale de la jambe (9) de l'ordre de 90°.

9. Procédé selon l'une des revendications 1 à 8,
**caractérisé en ce que** l'étape de freinage de la jambe (9) autour de l'axe (8) transversal, est en partie assurée par mise en contact de la jambe (9) avec un butoir (39) d'absorption d'énergie de crash en deuxième phase de crash, puis déformation plastique de ce butoir par la jambe (9), par exemple un tube (12) coulissant d'extrémité supérieure de la jambe (9) de train vient déformer un butoir comprenant une paroi avant (39) d'une case (11) d'escamotage du train (2) en fin de deuxième phase de crash.

10. Procédé selon l'une des revendications 1 à 9,
**caractérisé en ce que** lors de la première phase de crash, une partie supérieure (12) de la jambe (9) de train coulisse sensiblement de bas en haut et vient percuter une zone (37) à
déboutonner d'une paroi (38) supérieure d'une case (11) d'escamotage du train (2), et désolidariser cette zone (37) de la paroi (38) supérieure, sans absorption notable d'énergie.

11. Procédé selon l'une des revendications 1 à 10,
**caractérisé en ce que** les étapes de rétention du vérin (6) en position effacée et de freinage contrôlé de la jambe (9) de train sont au moins en partie effectuées simultanément, voire conjointement en parallèle.

12. Procédé selon l'une des revendications 1 à 11,
**caractérisé en ce que** la désolidarisation fonctionnelle de la jambe (9) de train par rapport au vérin (6) de rétraction, est effectuée par séparation, par exemple un verrou sécable une fois cisaillé par l'écrasement de la jambe (9) libère un mécanisme de rétention en position fonctionnelle du vérin (6) de sorte qu'une extrémité (23) de liaison du vérin (6) est détachée de la jambe (9).

13. Procédé selon l'une des revendications 1 à 11,
**caractérisé en ce que** la désolidarisation fonctionnelle de la jambe (9) de train par rapport au vérin (6) de rétraction, est effectuée par basculement de la liaison (14, 19) qui est permanente et indirecte, par exemple un verrou sécable une fois cisaillé par l'écrasement de la jambe (9) libère un mécanisme de rétention en position fonctionnelle du vérin (6) de sorte qu'une extrémité (23) de liaison du vérin (6) est relâchée par rapport à la jambe (9), tandis qu'une articulation (22) fixe permet le basculement de la liaison (14, 19) jusqu'à une position d'alignement des extrémités de liaison (23) et fixe (22) du vérin (6) avec une zone (24) d'attache de la liaison (19) permanente sur la jambe (9).

14. Système (15) anti-crash pour un atterrisseur (2) à embarquer sur un aéronef (1), cet atterrisseur (2) de type escamotable, possédant au moins : une jambe (9) de train montée pivotante autour d'un axe (8) transversal, sur une structure (5) de reprise d'efforts de l'aéronef (1) ; un vérin (6) de rétraction de la jambe (9) agencé pour provoquer les sorties et escamotages de la jambe (9), avec une extrémité (13) de raccord articulée sur la structure (5) ; ce système (15) comportant au moins :
- des premiers moyens anti-crash agencés pour assurer un amortissement de l'écrasement de l'atterrisseur (2) lors d'une première phase de crash ; et
- des deuxièmes moyens (16) anti-crash, agencés pour assurer l'inhibition de la rétraction, ainsi que le freinage du pivotement de la jambe (9) lors d'une deuxième phase de crash ;
**caractérisé en ce que** ce système (15) comprend au moins :
- des moyens de désolidarisation fonctionnelle de la jambe (9) de train par rapport au vérin (6), à l'issue de la première phase de crash ;
- au sein des deuxièmes moyens (16) anti-crash, des dispositifs de rétention et de blocage du vérin (6) ; et
- au sein des deuxièmes moyens (16) anti-crash, un dispositif (19, 25) de freinage contrôlé du pivotement de la jambe (9) de train, distinct du vérin (6) de rétraction.

15. Système (15) selon la revendication 14,
**caractérisé en ce que** ce système (15) est apte à mettre en oeuvre le procédé conforme à l'une des revendications 1 à 13.

16. Système (15) selon la revendication 14 ou 15,
**caractérisé en ce que** les moyens de désolidarisation fonctionnelle de la jambe (9) sont des moyens de séparation distincts de la liaison (14, 25), par exemple un verrou sécable à cisailler est agencé pour permettre la libération d'un mécanisme de rétention du vérin (6) en position fonctionnelle, de sorte qu'une extrémité (23) de liaison du vérin (6) est détachée de la jambe (9).

17. Système (15) selon la revendication 14 ou 15,
**caractérisé en ce que** les moyens de désolidarisation fonctionnelle de la jambe (9) sont des moyens (19) de basculement de la liaison (14) permanente, par exemple un verrou sécable à cisailler est agencé pour permettre la libération d'un mécanisme de rétention du vérin (6) en position fonctionnelle, de sorte qu'une extrémité (23) du vérin (6) est relâchée par rapport à la jambe (9) alors qu'une articulation (22) fixe du vérin (6) permet le basculement (19) de la liaison (14) permanente, jusqu'à une position d'alignement des extrémités de liaison (23) et fixe (22) avec une zone (24) d'attache de la liaison (14, 19) à la jambe (9).

18. Système (15) selon l'une des revendications 14 à 17,
**caractérisé en ce que** le dispositif de rétention est agencé pour que le vérin (6) soit maintenu sensiblement dans une position effacée vis-à-vis de la jambe (9), et est solidarisé à la structure (5) de reprise.

19. Système (15) selon l'une des revendications 14 à 18,
**caractérisé en ce que** le dispositif de rétention est au moins en partie directement solidarisé à la structure (5) de reprise, par exemple ce dispositif comporte au moins :
- un brin rigidement fixé par l'une de ses extrémités à une paroi (38) de la structure telle qu'un plancher (10), tandis que l'autre de ses extrémités est rigidement fixée au vérin (6) ; et/ou
- un brin rigidement fixé à chacune de ses extrémités à une paroi (38) de la structure (5) telle qu'un plancher (10), et formant berceau en chaînette où repose le vérin (6).

20. Système (15) selon l'une des revendications 14 à 19,
**caractérisé en ce que** le dispositif de rétention est au moins en partie indirectement solidarisé à la structure (5) de reprise, par exemple ce dispositif comporte au moins un brin solidaire d'un dispositif (25) de freinage, par exemple ce brin est intégré à un dispositif (25) de freinage à sangles (26) et/ou rigidement fixé à une paroi (38) de la structure (5) telle qu'un plancher (10), avec :
- l'une des extrémités du brin qui est rigidement fixée au dispositif (25) de freinage, tandis que son autre extrémité est rigidement fixée au vérin (6) ; et/ou
- chacune des extrémités du brin rigidement fixée au dispositif (25) de freinage, le brin formant berceau en chaînette où repose le vérin (6).

21. Système (15) selon l'une des revendications 14 à 20,
**caractérisé en ce que** le dispositif de blocage du vérin (6) fait partie des premiers moyens anti-crash, par exemple ce dispositif de blocage est au moins en partie intégré à ce vérin (6) et relié à au moins un capteur de vitesse et/ou d'intégrité du système et/ou d'efforts appliqués au train (2) afin de bloquer le vérin (6) de rétraction dans la position où il se trouve lorsqu'une valeur
mesurée par le capteur est égale à une valeur prédéterminée de crash.

22. Système (15) selon l'une des revendications 14 à 21,
**caractérisé en ce que** le dispositif (19, 25) de freinage des deuxièmes (16) moyens anti-crash est solidarisé d'une part directement ou indirectement à la structure (5) de reprise et d'autre part à la jambe (9) de train, par exemple à une zone (24) d'attache ou à un tube (12) coulissant.

23. Système (15) selon l'une des revendications 14 à 22,
**caractérisé en ce que** le dispositif (19, 25) de freinage et le dispositif de rétention des deuxièmes (16) moyens anti-crash sont au moins en partie voire complètement formés par les mêmes constituants, par exemple au moins l'un des constituants de solidarisation à la structure (5) du dispositif (19, 25) de freinage et/ou à la jambe (9) de train est confondu avec un constituant de solidarisation du dispositif de rétention.

24. Système (15) selon l'une des revendications 14 à 23,
**caractérisé en ce que** le dispositif (19, 25) de freinage et le dispositif de rétention des deuxièmes (16) moyens anti-crash sont dénués de constituants pneumatique, hydraulique ou électrique tels que commande et/ou asservissement, par exemple ces dispositifs (19, 25) de freinage et de rétention sont entièrement mécaniques.

25. Système (15) selon l'une des revendications 14 à 24,
**caractérisé en ce que** le dispositif (19, 25) de freinage et/ou le dispositif de rétention des moyens (16) anti-crash sont étendus sensiblement suivant une direction longitudinale (X), par exemple en position effacée au moins du dispositif de rétention et/ou dans une position de fin de course du dispositif (19, 25) de freinage.

26. Système (15) selon l'une des revendications 14 à 25,
**caractérisé en ce que** le dispositif de freinage des deuxièmes moyens (16) anti-crash possède au moins un organe (19, 25) de liaison (14) à déformation irréversible par allongement contrôlé, par exemple à effort sensiblement constant.

27. Système (15) selon la revendication 26,
**caractérisé en ce qu'**au moins un organe (25) de liaison (14) est du type à allongement par destruction partielle permettant une extension contrôlée de la liaison (14, 25) déformable, par exemple cette liaison (14, 25) est directe entre la structure (5) de reprise et la jambe (9) de train.

28. Système (15) selon la revendication 26 ou 27,
**caractérisé en ce que** la liaison (14, 25) déformable est impermanente entre la structure (5) et la jambe (9), par exemple cette liaison (14, 25) est effective quand elle comporte un tube (12) coulissant dans la jambe (9) et interposé au sein de la liaison (14, 25) par les premiers moyens anti-crash, ce tube (12) assurant la mise en prise de la jambe (9) avec un collet (31) ou analogues du dispositif de freinage.

29. Système (15) selon la revendication 26,
**caractérisé en ce qu'**au moins un organe (19) de liaison (14) est du type à allongement par déformation plastique contrôlée permettant un déploiement contrôlé de la liaison (19) déformable, par exemple cette liaison (14, 19) est indirecte entre la structure (5) de reprise et la jambe (9) de train, et comporte un constituant (6) de renvoi d'efforts de crash depuis la jambe (9) vers la structure (5).

30. Système selon la revendication 29,
**caractérisé en ce que** la liaison (14, 19) déformable est permanente entre la structure (5) et la jambe (9), par exemple cette liaison (14, 19) est basculante entre la jambe (9) de train et le vérin (6) de rétraction, ce vérin (6) restant constamment articulé sur la jambe (9) et faisant office de constituant (6) de renvoi d'efforts de crash depuis la jambe (9) vers la structure (5).

31. Système (15) selon l'une des revendications 14 à 30,
**caractérisé en ce que** le dispositif (19, 25) de freinage des moyens (16) anti-crash spécifiques comporte des moyens de débattement libre de la jambe (9) par rapport à la structure (5) sur une amplitude limitée de début de deuxième phase avant freinage, par exemple ces moyens autorisent un débattement libre par pivotement sur une amplitude de l'ordre de 1° à 30°, par exemple pour une amplitude totale de la jambe (9) de l'ordre de 90°, cette amplitude étant de l'ordre de 9° pour un dispositif (25) de freinage extensible et impermanent, tandis qu'elle est de l'ordre de 22° pour un dispositif (19) de freinage à déployer et permanent.

32. Système (15) selon l'une des revendications 14 à 31,
**caractérisé en ce que** le dispositif de freinage de la jambe (9) comporte un butoir (39) d'absorption d'énergie de crash en deuxième phase de crash par déformation plastique, par exemple ce butoir comprend une paroi avant (39) d'une case (11) d'escamotage du train (2) qui est déformé en fin de deuxième phase de crash par un tube (12) coulissant d'extrémité supérieure de la jambe (9) de train.

33. Système (15) selon l'une des revendications 26 à 31,
**caractérisé en ce que** l'organe (19, 25) à déformation plastique comprend au moins une pièce (19) en forme de fer à cheval apte à se déformer par linéarisation irréversible et/ou une pièce en forme de tube apte à se déformer par rétraction irréversible, par exemple la liaison (14) possède deux pièces (19) en forme de fer à cheval agencées de part et d'autre d'un plan médian (X, Z) d'élévation longitudinale, de manière symétrique.

34. Système (15) selon la revendication 33,
**caractérisé en ce qu'**une pièce (19) unique en forme de fer à cheval est agencée sensiblement dans un plan médian (X, Z) d'élévation longitudinale et comporte d'une part une articulation mobile (21) liée à une extrémité (23) de liaison du vérin (6) et d'autre part une articulation (22) liée à une zone (24) d'attache de la jambe (9), les articulations (21, 22) de la pièce (19) en forme de fer à cheval étant sensiblement étendues suivant une direction transversale (Y).

35. Système (15) selon la revendication 26,
**caractérisé en ce que** l'organe (25) de liaison (14) est impermanent à extension par destruction partielle et comporte au moins une sangle (26) lovée en au moins une série de boucles qui sont maintenues lovées par des agencements (27) de retenue destructibles, par exemple ces agencements (27) comportent des coutures et/ou un encollage et/ou soudage dont la destruction permet un déploiement contrôlé et progressif de la sangle (26) de liaison.

36. Système (15) selon la revendication 35,
**caractérisé en ce que** l'organe (25) de liaison (14) comporte au moins une sangle (26) dont la partie lovée fait office de partie apte à subir l'action de destruction, par exemple cette sangle (26) est agencée en berceau afin de former une partie du dispositif de rétention du vérin (6) étendue à proximité ainsi qu'au moins partiellement autour d'une partie inférieure de ce vérin (6).

37. Système (15) selon la revendication 36,
**caractérisé en ce que** l'organe (25) de liaison (14) comporte trois sangles (26) en berceau disposées en « U », avec d'une part une ferrure (17) d'articulation arrière sur la structure (5) de reprise et d'autre part un collet (31) avant destiné à l'encerclement de la jambe (9) de train de destination, par exemple une sangle (26) centrale du berceau en « U » est disposée au dessus du vérin (6) et sous le plancher (10) de la structure (5), deux autres sangles (26) latérales s'étendant vers le bas depuis la sangle (26) centrale.

38. Système (15) selon la revendication 37,
**caractérisé en ce que** le collet (31) est réalisé en acier à très haute teneur tel qu'un acier de type Z15CM17.03.

39. Système (15) selon la revendication 37 ou 38,
**caractérisé en ce que** l'organe (25) formant berceau en « U » comporte au moins :
- une sangle (26) de fond centrale transversalement et agencée sensiblement dans un plan longitudinal et transversal ; et
- deux sangles (26) latérales formant les branches du « U » et agencées de part et d'autre de la sangle (26) de fond, sensiblement symétriquement par rapport à un plan médian d'élévation longitudinale ;
ces sangles (26) étant articulées dans des lumières (28) de rebroussement, chacune par ses extrémités longitudinales d'une part de la ferrure (17) d'articulation arrière sur la structure (5) et d'autre part du collet (31) avant d'encerclement de la jambe (9) de train.

40. Système (15) selon l'une des revendications 26 à 39,
**caractérisé en ce que** l'organe (25) de liaison (14) impermanente à destruction partielle de déploiement contrôlé comporte au moins deux éléments (18) de solidarisation à rupture contrôlée, destinées à maintenir un collet (31) avant d'encerclement de la jambe (9) de train, provisoirement jusqu'en deuxième phase de crash.

41. Aéronef (1) par exemple à voilure tournante ; cet aéronef comportant au moins un atterrisseur (2) anti-crash, embarqué sur l'aéronef (1) et escamotable, possédant au moins : une jambe (9) de train montée pivotante autour d'un axe (8) transversal, sur une structure (5) de reprise d'efforts de l'aéronef (1) ; un vérin (6) de rétraction de la jambe (9) agencé pour provoquer les sorties et escamotages de la jambe (9), avec une extrémité (13) de raccord articulée sur la structure (5) ; cet atterrisseur (2) étant couplé à un système (15) anti-crash et comportant au moins : des premiers moyens anti-crash agencés pour assurer un amortissement de l'écrasement de l'atterrisseur (2) lors d'une première phase de crash ; et des deuxièmes moyens (16) anti-crash, agencés pour assurer l'inhibition de la rétraction, ainsi que le freinage du pivotement de la jambe (9) lors d'une deuxième phase de crash ;
**caractérisé en ce que** ce système (15) comprend au moins : des moyens de désolidarisation fonctionnelle de la jambe (9) de train par rapport au vérin (6), à l'issue de la première phase de crash ; au sein des deuxièmes moyens (16) anti-crash, des dispositifs de rétention et de blocage du vérin (6) ; et au sein des deuxièmes moyens (16) anti-crash, un dispositif (19, 25) de freinage contrôlé du pivotement de la jambe (9) de train, distinct du vérin (6) de rétraction.

42. Aéronef (1) selon la revendication 41 ;
**caractérisé en ce que** la structure (5) de reprise comporte au moins une paroi (38) à déboutonner entourée d'une zone (37) fragilisée telle qu'un assemblage par colle et/ou rivets, agencée pour qu'en première phase de crash, une partie (12) d'une jambe (9) de train vienne percuter cette paroi (38) supérieure et la désolidariser du reste de la structure (5) à l'emplacement de la zone (37), sans absorption notable d'énergie.

43. Aéronef (1) selon la revendication 42,
**caractérisé en ce que** la structure (5) de reprise comporte au moins un butoir (39) d'absorption d'énergie de crash en deuxième phase de crash par déformation plastique, par exemple ce butoir comprend une paroi avant (39) d'une case (11) d'escamotage du train (2) qui est déformé en fin de deuxième phase de crash par un tube (12) coulissant d'extrémité supérieure de la jambe (9) de train.

## Patentansprüche

1. Anti-Crash-Bordverfahren für ein Fahrwerk (2) eines Luftfahrzeugs (1), zum Beispiel eines Drehflügel-Luftfahrzeugs, wobei das Fahrwerk (2) vom Typ einziehbares Fahrwerk mindestens aufweist:
- ein Fahrwerkbein (9), das an einem Tragwerk zur Aufnahme von Kräften des Luftfahrzeugs (1) um eine Quer-Schwenkachse (8) drehbar angelenkt ist, um sein Ausfahren und Einziehen zu ermöglichen,
- einen Einziehzylinder (6) mit einem Verbindungsende, das an der Kraftaufnahmestruktur angelenkt ist, um das Ausfahren und das Einziehen des Fahrwerkbeins (9) zu bewirken,
- erste Anti-Crash-Mittel zur Sicherstellung einer Verminderung einer Zerquetschung des Fahrwerks (2) in einer ersten Phase des Crashs, und
- zweite Anti-Crash-Mittel (16) zur Sicherstellung einer Verhinderung eines Zusammenziehens sowie zum Bremsen der Schwenkbewegung des Fahrwerkbeins (9) in einer zweiten Phase,
**dadurch gekennzeichnet, dass** während einer zweiten Phase des Crashs am Ende der ersten Phase das Verfahren mindestens die folgenden zusätzlichen Funktionsschritte sicherstellt:
- ein funktionelles Lösen des Fahrwerkbeins (9) von dem Einziehzylinder (6),
- Rückhalten und Blockieren des Einziehzylinders (6) und
- sobald der Zylinder (6) blockiert ist, kontrolliertes Bremsen der Schwenkbewegung des Fahrwerkbeins (9) um seine Querachse (8).

2. Verfahren nach Anspruch 1,
**dadurch gekennzeichnet, dass** der Schritt des Bremsens der Schwenkbewegung mindestens zum Teil sichergestellt wird durch eine irreversible Verlängerungsphase einer verformbaren Verbindung (14, 19, 25) zwischen dem Aufnahmetragwerk (5) und dem Fahrwerkbein (9), zum Beispiel mit im Wesentlichen konstanter Beanspruchung.

3. Verfahren nach Anspruch 2,
**dadurch gekennzeichnet, dass** die Verlängerungsphase mindestens zum Teil durchgeführt wird durch mindestens eine teilweise Zerstörung (27), die eine kontrollierte Ausdehnung der verformbaren Verbindung (14, 25) erlaubt, wobei zum Beispiel diese Verbindung (14, 25) eine direkte Verbindung zwischen dem Aufnahmetragwerk (5) und dem Fahrwerkbein (9) ist.

4. Verfahren nach Anspruch 2 oder 3,
**dadurch gekennzeichnet, dass** die Phase der Verlängerung mindestens teilweise durchgeführt wird durch mindestens eine plastische Verformung, die eine kontrollierte Auseinanderfaltung der verformbaren Verbindung (14, 19) ermöglicht, wobei diese Verbindung (14, 19) zum Beispiel eine indirekte Verbindung zwischen dem Aufnahmetragwerk (5) und dem Fahrwerkbein (9) ist und eine Rückstellungsfunktion (6) zwischen dem Tragwerk (5) und dem Fahrwerkbein (9) aufweist.

5. Verfahren nach einem der Ansprüche 2 bis 4,
**dadurch gekennzeichnet, dass** die Phase der Verlängerung zumindest teilweise durchgeführt wird durch eine Phase der Dehnung (25) durch teilweise Zerstörung (27) einer nicht permanenten Verbindung (14) zwischen dem Tragwerk (5) und dem Fahrwerkbein (9), wobei zum Beispiel diese Verbindung (14) erhalten wird durch die herbeigeführte Einfügung eines Organs (25, 31) dieser Verbindung (14) vor der zweiten Crash-Phase.

6. Verfahren nach Anspruch 5,
**dadurch gekennzeichnet, dass** die herbeigeführte Einfügung dieser Verbindung (14) vor der zweiten Crash-Phase realisiert wird durch ein In-Eingriff-Bringen während der ersten Phase eines in dem Fahrwerkbein (9) gleitenden Rohrs (12) mit einem Muffenrohr (31) oder dergleichen.

7. Verfahren nach einem der Ansprüche 2 bis 6,
**dadurch gekennzeichnet, dass** die Phase der Verlängerung mindestens teilweise durchgeführt wird durch eine Phase der Auseinanderfaltung (19) einer permanenten Verbindung (14) zwischen dem Tragwerk (5) und dem Fahrwerkbein (9), wobei zum Beispiel diese Verbindung (14, 19) eine Verschwenkung auslöst zwischen dem Fahrwerkbein (9) und dem Einziehzylinder (6), wobei dieser Zylinder (6) während der zweiten Phase des Crashs an dem Fahrwerkbein (9) angelenkt bleibt.

8. Verfahren nach einem der Ansprüche 1 bis 7,
**dadurch gekennzeichnet, dass** ein freies Verschwenken (E) des Fahrwerkbeins (9) vor dessen Abbremsung mit einer vorbestimmten Amplitude sichergestellt wird, die zum Beispiel zwischen 1° und 30° liegt, insbesondere in der Größenordnung von 9° oder 22° in dem Fall einer Gesamtamplitude des Fahrwerkbeins (9) der Größenordnung von 90°.

9. Verfahren nach einem der Ansprüche 1 bis 8,
**dadurch gekennzeichnet, dass** der Schritt des Abbremsens des Fahrwerkbeins (9) um die Querachse (8) zum Teil sichergestellt wird durch das In-Kontakt-Bringen des Fahrwerkbeins (9) mit einem Anschlag (39) zur Absorption der Crash-Energie in der zweiten Phase des Crashs und anschließende plastische Verformung dieses Anschlags durch das Fahrwerkbein (9), wobei zum Beispiel ein gleitendes Rohr (12) des oberen Endes des Fahrwerkbeins (9) einen Anschlag verformt, der eine vordere Wand (39) eines Kastens (11) zum Verstauen des Fahrwerks (2) am Ende der zweiten Phase des Crashs aufweist.

10. Verfahren nach einem der Ansprüche 1 bis 9,
**dadurch gekennzeichnet, dass** während der ersten Phase des Crashs ein oberer Teil (12) des Fahrwerkbeins (9) im Wesentlichen von unten nach oben gleitet und einen zu öffnenden Bereich (37) einer oberen Wandung (38) eines Kastens (11) zum Verstauen des Fahrwerks (2) durchstößt und diesen Bereich (37) von der oberen Wandung (38) ohne merkliche Energieabsorption löst.

11. Verfahren nach einem der Ansprüche 1 bis 10,
**dadurch gekennzeichnet, dass** die Einziehschritte des Zylinders (6) in eingezogener Stellung und die Schritte einer kontrollierten Abbremsung des Fahrwerkbeins (9) mindestens teilweise gleichzeitig, ja sogar gemeinsam parallel, ausgeführt werden.

12. Verfahren nach einem der Ansprüche 1 bis 11,
**dadurch gekennzeichnet, dass** das funktionelle Lösen des Fahrwerkbeins (9) von dem Einziehzylinder (6) durch eine Trennung ausgeführt wird, wobei zum Beispiel ein teilbarer Riegel, der durch die Zerquetschung des Fahrwerkbeins (9) abgeschnitten wird, einen Mechanismus zum Rückhalten des Zylinders (6) in Betriebsstellung derart freigibt, dass ein Verbindungsende (23) des Zylinders (6) von dem Fahrwerkbein (9) abgelöst wird.

13. Verfahren nach einem der Ansprüche 1 bis 11,
**dadurch gekennzeichnet, dass** das funktionelle Lösen des Fahrwerkbeins (9) von dem Einziehzylinder (6) ausgeführt wird durch
Verschwenken der Verbindung (14, 19), die eine permanente und indirekte Verbindung ist, wobei zum Beispiel ein teilbarer Riegel, wenn er durch Zerquetschung des Fahrwerkbeins (9) abgeschnitten ist, einen Rückhaltemechanismus in Betriebsstellung des Zylinders (6) derart freigibt, dass ein Verbindungsende (23) des Zylinders (6) von dem Fahrwerkbein (9) abgelöst wird, wohingegen ein festes Gelenk (22) ein Verschwenken der Verbindung (14, 19) erlaubt, bis in eine Stellung der Ausrichtung der Verbindungsenden (23) und bis zu einer festen Stellung (22) des Zylinders (6) relativ zu einem Befestigungsbereich (24) der permanenten Verbindung (19) auf dem Fahrwerkbein (9).

14. Anti-Crash-System (15) für ein Fahrwerk (2) an Bord eines Luftfahrzeugs (1), wobei dieses Fahrwerk (2) vom einziehbaren Typ mindestens aufweist: ein Fahrwerkbein (9), welches um eine Querachse (8) schwenkbar auf einem Tragwerk (5) des Luftfahrzeugs (1) zur Aufnahme von Kräften montiert ist, einen Zylinder (6) zum Einziehen des Fahrwerkbeins (9), der angeordnet ist, um das Ausfahren und das Einziehen des Fahrwerkbeins (9) zu bewirken, mit einem Verbindungsende (13), das an dem Tragwerk (5) angelenkt ist, wobei dieses System (15) mindestens aufweist:
- erste Anti-Crash-Mittel, die vorgesehen sind, um eine Verminderung der Zerquetschung des Fahrwerks (2) während einer ersten Crash-Phase sicherzustellen, und
- zweite Anti-Crash-Mittel (15), die vorgesehen sind, um das Zusammenziehen zu verhindern und um das Verschwenken des Fahrwerkbeins (9) während einer zweiten Crash-Phase zu bremsen,
dadurch gekennnzeichnet, dass das System (15) mindestens aufweist:
- Mittel zum funktionellen Lösen des Fahrwerkbeins (9) von dem Zylinder (6) am Ende der ersten Crash-Phase,
- in den zweiten Anti-Crash-Mitteln (16) Mittel zum Zurückhalten und Blockieren des Zylinders (6), und
- in den zweiten Anti-Crash-Mitteln (16) eine Vorrichtung (19, 25) zum kontrollierten Abbremsen der Schwenkbewegung des Fahrwerkbeins (9), wobei die Vorrichtung verschieden ist von dem Einziehzylinder (6).

15. System (15) nach Anspruch 14,
**dadurch gekennzeichnet, dass** das System (15) in der Lage ist, das Verfahren nach einem der Ansprüche 1 bis 13 auszuführen.

16. System (15) nach Anspruch 14 oder 15,
**dadurch gekennzeichnet ,dass** die Mittel zum funktionellen Lösen des Fahrwerkbeins (9) Trennmittel sind, die unterschiedlich von der Verbindung (14, 25) sind, wobei zum Beispiel ein durch Abscheren teilbarer Riegel vorgesehen ist, um die Freigabe eines Rückhaltemechanismus' des Zylinders (6) in Betriebsposition zu ermöglichen, wobei ein Verbindungsende (23) des Zylinders (6) von dem Fahrzeugbein (9) gelöst wird.

17. System (15) nach Anspruch 14 oder 15,
**dadurch gekennzeichnet, dass** die Mittel zum funktionellen Lösen des Fahrwerkbeins (9) Mittel (19) zum Verschwenken der permanenten Verbindung (14) sind, wobei zum Beispiel ein durch Abscheren teilbarer Riegel vorgesehen ist, um die Freigabe eines Rückhaltemechanismus' des Zylinders (6) in Betriebsposition zu ermöglichen, derart, dass ein Ende (23) des Zylinders (6) von dem Fahrwerkbein (9) gelöst wird, während ein festes Gelenk (22) des Zylinders (6) das Verschwenken (19) der permanenten Verbindung (14) bis zu einer festen (22) Stellung der Ausrichtung der Verbindungsenden (23) mit einem Befestigungsbereich (24) der Verbindung (14, 19) an dem Fahrwerkbein (9) ermöglicht.

18. System (15) nach einem der Ansprüche 14 bis 17,
**dadurch gekennzeichnet, dass** die Rückhaltevorrichtung vorgesehen ist, um den Zylinder (6) in einer gegenüber dem Fahrwerkbein (9) zurückgezogenen Stellung zu halten und wobei die Vorrichtung an dem Aufnahmetragwerk (5) befestigt ist.

19. System (15) nach einem der Ansprüche 14 bis 18,
**dadurch gekennzeichnet, dass** die Rückhaltevorrichtung zumindest teilweise direkt an dem Aufnahmetragwerk (5) befestig ist, wobei diese Vorrichtung zum Beispiel mindestens aufweist:
- einen an einer Wandung (38) des Tragwerks, wie beispielsweise einem Boden (10), mit einem seiner Enden starr befestigten Draht, während das andere seiner Enden am Zylinder (6) starr befestigt ist, und/oder
- einen mit seinen beiden Enden an einer Wandung (38) des Tragwerks (5), wie beispielsweise einem Boden (10), starr befestigten Draht, der eine Schlaufe bildet, in der der Zylinder (6) ruht.

20. System (15) nach einem der Ansprüche 14 bis 19,
**dadurch gekennzeichnet, dass** die Rückhaltevorrichtung zumindest teilweise indirekt mit dem Aufnahmetragwerk (5) fest verbunden ist, wobei zum Beispiel diese Vorrichtung mindestens einen Draht aufweist, der mit einer Bremsvorrichtung (25) fest verbunden ist, wobei zum Beispiel dieser Draht in einer Bremsvorrichtung (25) mit Gurten (26) integriert ist und/oder an einer Wandung (38) des Tragwerks (5), wie beispielsweise einem Boden (10), starr befestigt ist, wobei:
- eines der Enden des Drahtes starr an der Bremsvorrichtung (25) befestigt ist, während sein anderes Ende starr an dem Zylinder (6) befestigt ist, und/oder
- jedes der Enden des Drahtes starr an der Bremsvorrichtung (25) befestigt ist, wobei der Draht eine Schlaufe bildet, in der der Zylinder (6) ruht.

21. System (15) nach einem der Ansprüche 14 bis 20,
**dadurch gekennzeichnet, dass** die Vorrichtung zum Blockieren des Zylinders (6) Teil eines ersten Anti-Crash-Mittels ist, wobei zum Beispiel diese Blockiervorrichtung mindestens teilweise in den Zylinder (6) integriert ist und mit mindestens einem Geschwindigkeitsdetektor und/oder einem Detektor zum Erfassen der Unversehrtheit des Systems und/oder einem Detektor der Kraftbeanspruchungen des Fahrwerks (2) verbunden ist, um den Einziehzylinder (6) in einer Stellung zu blockieren, in der er sich befindet, wenn ein von dem Detektor gemessener Wert gleich einem vorbestimmten Crash-Wert ist.

22. System (15) nach einem der Ansprüche 14 bis 21,
**dadurch gekennzeichnet, dass** die Vorrichtung (19, 25) zum Bremsen der zweiten Anti-Crash-Mittel (16) befestigt ist, einerseits direkt oder indirekt an dem Aufnahmetragwerk (5) und andererseits an dem Fahrwerkbein (9), zum Beispiel an einem Befestigungsbereich (24) oder an einem gleitenden Rohr (12).

23. System (15) nach einem der Ansprüche 14 bis 22,
**dadurch gekennzeichnet, dass** die Bremsvorrichtung (19, 25) und die Rückhaltevorrichtung der zweiten Anti-Crash-Mittel (16) mindestens teilweise oder sogar vollständig aus denselben Bestandteilen gebildet sind, wobei zum Beispiel mindestens einer der Bestandteile der Befestigung an dem Tragwerk (5) der Bremsvorrichtung und/oder an dem Fahrwerkbein (9) gleich einem Bestandteil der Befestigung der Rückhaltevorrichtung ist.

24. System (15) nach einem der Ansprüche 14 bis 23,
**dadurch gekennzeichnet, dass** die Bremsvorrichtung (19, 25) und die Rückhaltevorrichtung des zweiten Anti-Crash-Mittels (16) keine pneumatischen, hydraulischen oder elektrischen Bestandteile aufweisen, wie Steuerungen und/oder Regelungen, wobei zum Beispiel diese Bremsvorrichtungen (19, 25) und Rückhaltevorrichtungen vollständig mechanisch ausgeführt sind.

25. System (15) nach einem der Ansprüche 14 bis 24,
**dadurch gekennzeichnet, dass** die Bremsvorrichtung (19, 25) und/oder die Rückhaltevorrichtung der Anti-Crash-Mittel (16) sich im Wesentlichen entlang einer Längsrichtung (X) erstrecken, zum Beispiel in eingezogener Stellung mindestens der Rückhaltevorrichtung und/oder in einer Bewegungsendstellung der Bremsvorrichtung (19, 25).

26. System (15) nach einem der Ansprüche 14 bis 25,
**dadurch gekennzeichnet, dass** die Bremsvorrichtung der zweiten Anti-Crash-Mittel (16) mindestens ein Verbindungsorgan (14, 19, 25) mit irreversibler Verformung durch kontrollierte Verlängerung, zum Beispiel mit konstanter Kraftbeanspruchung, aufweist.

27. System (15) nach Anspruch 26,
**dadurch gekennzeichnet, dass** das mindestens eine Verbindungsorgan (14, 25) vom Typ eines Organs zur Verlängerung durch teilweise Zerstörung ist, das eine kontrollierte Ausdehnung der verformbaren Verbindung (14, 25) ermöglicht, wobei zum Beispiel diese Verbindung (14, 25) eine direkte Verbindung zwischen dem Aufnahmetragwerk (5) und dem Fahrwerkbein (9) ist.

28. System (15) nach Anspruch 26 oder 27,
**dadurch gekennzeichnet, dass** die verformbare Verbindung (14, 25) zwischen dem Tragwerk (5) und dem Fahrwerkbein (9) nicht permanent ist, wobei zum Beispiel diese Verbindung (14, 25) wirksam ist, wenn sie ein in dem Fahrwerkbein (9) gleitendes Rohr aufweist, das in der Verbindung (14, 25) durch die ersten Crash-Mittel eingesetzt ist, wobei dieses Rohr (12) den Eingriff des Fahrwerkbeins (9) mit einem Muffenrohr (31) der Bremsvorrichtung oder ähnlichem sicherstellt.

29. System (15) nach Anspruch 26,
**dadurch gekennzeichnet, dass** mindestens ein Verbindungsorgan (14, 19) vom Typ eines Verbindungsorgans zur Verlängerung durch kontrollierte plastische Verformung ist, welches ein kontrolliertes Auseinanderfalten der verformbaren Verbindung (19) ermöglicht, wobei zum Beispiel diese Verbindung (14, 19) zwischen dem Aufnahmetragwerk (5) und dem Fahrwerkbein (9) indirekt ist und einen Bestandteil (6) zur Umleitung der Kräfte des Crashs ausgehend von dem Fahrwerkbein (9) auf das Tragwerk (5) aufweist.

30. System nach Anspruch 29,
**dadurch gekennzeichnet, dass** die verformbare Verbindung (14, 19) zwischen dem Tragwerk (5) und dem Fahrwerkbein (9) permanent ist, wobei zum Beispiel diese Verbindung (14, 19) zwischen dem Fahrwerkbein (9) und dem Einziehzylinder (6) schwenkbar ist, wobei der Zylinder (6) konstant an dem Fahrwerkbein (9) angelenkt ist und einen Bestandteil (6) bildet, der die Kräfte des Crashs ausgehend von dem Fahrwerkbein (9) auf das Tragwerk (5) umleitet.

31. System (15) nach einem der Ansprüche 14 bis 30,
**dadurch gekennzeichnet, dass** die Vorrichtung (19, 25) zum Bremsen der spezifischen Anti-Crash-Mittel (16) Mittel zum freien Verschwenken des Fahrwerkbeins (9) relativ zu dem Tragwerk (5) über eine begrenzte Amplitude ab dem Beginn der zweiten Phase vor der Bremsung aufweist, wobei zum Beispiel diese Mittel ein freies Verschwenken mit einer Amplitude der Größenordnung von 1° bis 30° erlauben, zum Beispiel bei einer Gesamtamplitude des Fahrwerkbeins (9) von der Größenordnung 90°, wobei diese Amplitude von der Größenordnung von 9° für eine ausdehnbare und nicht permanente Bremsvorrichtung (25) ist, während die Amplitude von der Größenordnung von 22° für eine spreizbare und permanente Bremsvorrichtung (19) ist.

32. System (15) nach einem der Ansprüche 14 bis 31,
**dadurch gekennzeichnet, dass** die Bremsvorrichtung des Fahrzeugbeins (9) einen Anschlag (39) zur Aufnahme von Crash-Energie in der zweiten Crash-Phase durch plastische Verformung aufweist, wobei zum Beispiel dieser Anschlag eine Vorderwandung (39) eines Kastens (11) zum Verstauen des Fahrwerks (2) aufweist, das am Ende der zweiten Crash-Phase durch ein gleitendes Rohr des oberen Endes des Fahrwerkbeins (9) verformt wird.

33. System (15) nach einem der Ansprüche 26 bis 31,
**dadurch gekennzeichnet, dass** das sich plastisch verformende Organ (19, 25) mindestens ein hufeisenförmiges Teil (19) aufweist, das sich durch irreversibles Gradeziehen verformen kann und/oder ein rohrförmiges Teil, das sich durch irreversibles Zusammenziehen verformen kann, wobei zum Beispiel die Verbindung (14) zwei hufeisenförmige Teile (19) aufweist, die symmetrisch zu beiden Seiten einer vertikalen Längsebene angeordnet sind.

34. System (15) nach Anspruch 33,
**dadurch gekennzeichnet, dass** ein einziges Teil (19) in Form eines Hufeisens im Wesentlichen in einer vertikalen Längsebene (X, Z) angeordnet ist, und einerseits ein bewegliches Gelenk (21) aufweist, das mit einem Ende (23) der Verbindung des Zylinders (6) verbunden ist, und andererseits mit einem Gelenk (22) verbunden ist, das mit einem Befestigungsbereich (24) des Fahrwerkbeins (9) verbunden ist, wobei die Gelenke (21, 22) des hufeisenförmigen Teils (19) sich im Wesentlichen in einer Querrichtung (Y) erstrecken.

35. System (15) nach Anspruch 26,
**dadurch gekennzeichnet, dass** das Verbindungsorgan (14, 25) mit Ausdehnung durch teilweise Zerstörung nicht permanent ist und mindestens einen Gurt (26) aufweist, der zu mindestens einer Reihe von Schleifen aufgewickelt ist, die durch zerstörbare Rückhalteanordnungen (27) aufgewickelt bleiben, wobei zum Beispiel diese Anordnungen (27) Nähte und/oder eine Verklebung und/oder Verschweißung aufweisen, deren Zerstörung das fortschreitende und kontrollierte Abrollen des Verbindungsgurtes (26) ermöglicht.

36. System (15) nach Anspruch 35,
**dadurch gekennzeichnet, dass** das Verbindungsorgan (14, 25) mindestens einen Gurt (26) aufweist, dessen zusammengerollter Teil einen Teil darstellt, der einer Zerstörung ausgesetzt werden kann, wobei zum Beispiel dieser Gurt (26) als Schleife angeordnet ist, um einen Teil der Rückhaltevorrichtung des Zylinders (6) zu bilden, die sich in der Nähe sowie zumindest teilweise um einen unteren Teil des Zylinders (6) erstreckt.

37. System (15) nach Anspruch 36,
**dadurch gekennzeichnet, dass** das Verbindungsorgan (14, 25) drei U-förmige Gurtschleifen (26) aufweist mit einerseits einem hinteren Gelenkbeschlag (17) auf dem Aufnahmetragwerk (5) und andererseits einem vorderen Muffenrohr (31), das dazu bestimmt ist, das bestimmte Fahrwerkbein (9) zu umschließen, wobei zum Beispiel eine U-förmige Gurtschlaufe (26) unter dem Zylinder (6) und unter dem Boden (10) des Tragwerks (5) angeordnet ist, und zwei weitere seitliche Schlaufen (26) sich ausgehend von der mittleren Schlaufe (26) nach unten erstrecken.

38. System (15) nach Anspruch 37,
**dadurch gekennzeichnet, dass** das Muffenrohr (31) aus einem sehr hochlegierten Stahl gefertigt ist, wie beispielsweise einem Stahl vom Typ Z15CM17.03.

39. System nach Anspruch 37 oder 38,
**dadurch gekennzeichnet, dass** das Organ (25), welches eine Uförmige Schlaufe bildet, mindestens aufweist:
- eine mittlere quer verlaufende Grundschlaufe (26), die im Wesentlichen in einer längs und quer verlaufenden Ebene angeordnet ist, und
- zwei seitliche Schlaufen (26), die die Schenkel des "U"s bilden und zu beiden Seiten der Grundschlaufe (26) im Wesentlichen symmetrisch bezüglich einer vertikalen Mittellängsebene angeordnet sind,
wobei die Schlaufen (26) in Umkehröffnungen (28) angelenkt sind, jede durch ihre Längsenden einerseits des hinteren Gelenkeschlags (17) auf dem Tragwerk (5) und andererseits durch das vordere Muffenrohr (31) zur Umschließung des Fahrwerkbeins (9).

40. System (15) nach einem der Ansprüche 26 bis 39,
**dadurch gekennzeichnet, dass** das nicht permanente Verbindungsorgan (14, 25) mit teilweiser Zerstörung und kontrollierter Auseinanderfaliung mindestens zwei Befestigungselemente (18) mit kontrolliertem Bruchverhalten aufweist, die dazu bestimmt sind, das vordere Muffenrohr (31) zur Umschließung des Fahrwerkbeins (9) provisorisch bis zur zweiten Crash-Phase zu haltern.

41. Luftfahrzeug (1), zum Beispiel Drehflügel-Luftfahrzeug, wobei dieses Luftfahrzeug mindestens ein am Luftfahrzeug (1) einziehbar montiertes Anti-Crash-Fahrwerk (2) aufweist, welches mindestens aufweist: ein Fahrwerkbein (9), das schwenkbar um eine Querachse (8) an einem Tragwerk (5) zur Aufnahme von Kräften des Luftfahrzeugs (1) montiert ist, einen Zylinder (6) zum Einziehen des Fahrwerkbeins (9), der vorgesehen ist, um das Ausfahren und das Einziehen des Fahrwerkbeins (9) zu bewirken, mit einem Verbindungsende (13), das an dem Tragwerk (5) angelenkt ist, wobei dieses Fahrwerk (2) an ein Anti-Crash-System (15) gekoppelt ist und mindestens aufweist: erste Anti-Crash-Mittel, die vorgesehen sind, um eine Verminderung der Zerquetschung des Fahrwerks (2) während einer ersten Crash-Phase sicherzustellen, und zweite Anti-Crash-Mittel (16), die vorgesehen sind, um die Verhinderung des Zusammenziehens sowie das Abbremsen der Schwenkbewegung des Fahrwerkbeins (9) während einer zweiten Crash-Phase sicherzustellen,
**dadurch gekennzeichnet, dass** das System (15) mindestens Mittel zum funktionellen Lösen des Fahrwerkbeins (9) von dem Zylinder (6) am Ende der ersten Crash-Phase, in den zweiten Anti-Crash-Mitteln (16) Vorrichtungen zum Rückhalten und zur Blockade des Zylinders (6), und in den zweiten Anti-Crash-Mitteln (16) eine Vorrichtung (19, 25) zum kontrollierten Bremsen der Schwenkbewegung des Fahrwerkbeins (9), welche unterschiedlich ist von dem Einziehzylinder (6), aufweist.

42. Luftfahrzeug (1) nach Anspruch 41,
**dadurch gekennzeichnet, dass** das Aufnahmetragwerk (5) mindestens eine Wandung (38) aufweist, die zu öffnen ist und die umgeben ist von einem fragilen Bereich (37), wie einer Zusammenfügung durch Verklebung und/oder Nieten, der vorgesehen ist, damit in der ersten Crash-Phase ein Teil (12) eines Fahrwerkbeins (9) diese obere Wandung (38) durchstößt und diese von dem Rest des Tragwerks am Ort des Bereichs (37) ablöst, ohne wesentliche Energieabsorption.

43. Luftfahrzeug (1) nach Anspruch 42,
**dadurch gekennzeichnet, dass** das Aufnahmetragwerk (5) mindestens einen Anschlag (39) zur Absorption von Crash-Energie in der zweiten Crash-Phase durch plastische Verformung aufweist, wobei zum Beispiel dieser Anschlag eine vordere Wandung (39) eines Kastens (11) zum Verstauen des Fahrwerks (2) aufweist, die am Ende der zweiten Crashphase durch ein gleitendes Rohr (12) des oberen Endes des Fahrwerkbeins (9) verformt wird.

## Claims

1. An onboard anti-crash method for a landing gear (2) of an aircraft (1), for example a rotary-wing aircraft, this landing gear (2), which is of retractable type, having at least:
- a landing-gear strut (9) articulated to a force take-up structure of the aircraft (1) about a transverse pivot axis (8), in order to enable it to be extended and retracted;
- a retraction actuator (6) with a coupling end articulated to the take-up structure, in order to cause the landing-gear strut (9) to be extended and retracted;
- first anti-crash means, in order to provide a function of damping the collapse of the landing gear (2) in the first crash phase; and
- second anti-crash means (16), in order to provide functions of inhibition of the retraction and also of braking of the pivoting of the strut (9) in the second phase;
**characterised in that**, during a second crash phase after the end of the first phase, this method provides at least the following additional steps or functions:
- functionally disconnecting the landing-gear strut (9) relative to the retraction actuator (6);
- retaining and blocking the retraction actuator (6); and
- once the actuator (6) has been blocked, controlled braking of the pivoting of the landing-gear strut (9) about its transverse axis (8).

2. A method according to Claim 1,
**characterised in that** the step of braking the pivoting is provided at least in part by a phase of irreversible elongation of a deformable connection (14, 19, 25) between the takeup structure (5) and the landing-gear strut (9), for example at a substantially constant force.

3. A method according to Claim 2,
**characterised in that** the elongation phase is performed at least in part by at least one partial destruction action (27) which permits controlled extension of the deformable connection (14, 25), for example this connection (14, 25) is direct between the takeup structure (5) and the landing-gear strut (9).

4. A method according to Claim 2 or 3,
**characterised in that** the elongation phase is performed at least in part by at least one plastic deformation action which permits controlled deployment of the deformable connection (14, 19), for example this connection (14, 19) is indirect between the takeup structure (5) and the landing-gear strut (9), and comprises a relay function (6) between the structure (5) and the strut (9).

5. A method according to one of Claims 2 to 4,
**characterised in that** the elongation phase is brought about at least in part by a phase of extension (25) by partial destruction (27) of a non-permanent connection (14) between the structure (5) and the strut (9), for example this connection (14) is obtained by caused interposition of a member (25, 31) of this connection (14) prior to the second crash phase.

6. A method according to Claim 5,
**characterised in that** the caused interposition of this connection (14) prior to the second crash phase is carried out by, during the first phase, engaging a sliding tube (12) in the landing-gear strut (9) with a collar (31) or the like.

7. A method according to one of Claims 2 to 6,
**characterised in that** the elongation phase is brought about at least in part by a phase of deployment (19) of a permanent connection (14) between the structure (5) and the strut (9), for example this connection (14, 19) actuates tilting between the landing-gear strut (9) and the retraction actuator (6), this actuator (6) remaining articulated to the strut (9) during the second crash phase.

8. A method according to one of Claims 1 to 7,
**characterised in that** free pivoting (E) of the strut (9) prior to its braking is provided with a predetermined amplitude, for example of between 1° and 30°, in particular of the order of 9° or 22° in the case of a total amplitude of the strut (9) of the order of 90°.

9. A method according to one of Claims 1 to 8,
**characterised in that** the step of braking of the strut (9) about the transverse axis (8) is provided in part by bringing the strut (9) into contact with a stop (39) for absorbing crash energy in the second crash phase, then plastic deformation of this stop by the strut (9), for example a sliding tube (12) of the upper end of the landing-gear strut (9) deforms a stop comprising a front wall (39) of a compartment (11) for stowing the retracted landing gear (2) at the end of the second crash phase.

10. A method according to one of Claims 1 to 9,
**characterised in that** during the first crash phase, an upper portion (12) of the landing-gear strut (9) slides substantially from bottom to top and strikes a releasable zone (37) of an upper wall (38) of a compartment (11) for stowing the retracted landing gear (2), and disconnects this zone (37) from the upper wall (38), without any significant absorption of energy.

11. A method according to one of Claims 1 to 10,
**characterised in that** the steps of retaining the actuator (6) in an out-of-the-way position and of controlled braking of the landing-gear strut (9) are effected at least in part simultaneously, or even jointly in parallel.

12. A method according to one of Claims 1 to 11,
**characterised in that** the functional disconnection of the landing-gear strut (9) relative to the retraction actuator (6) is effected by separation, for example a shear bolt, once sheared by the collapse of the strut (9), releases a mechanism for retaining the actuator (6) in the functional position so that a connecting end (23) of the actuator (6) is detached from the strut (9).

13. A method according to one of Claims 1 to 11,
**characterised in that** the functional disconnection of the landing-gear strut (9) relative to the retraction actuator (6) is effected by tilting the connection (14, 19) which is permanent and indirect, for example a shear bolt, once sheared by the collapse of the strut (9), releases a mechanism for retaining the actuator (6) in the functional position so that a connecting end (23) of the actuator (6) is released relative to the strut (9), while a fixed articulation (22) enables the connection (14, 19) to tilt into a position of alignment of the connecting end (23) and fixed end (22) of the actuator (6) with an attachment zone (24) for attaching the permanent connection (19) to the strut (9).

14. An anti-crash system (15) for a landing gear (2) for mounting on board an aircraft (1), this landing gear (2), which is of retractable type, having at least: a landing-gear strut (9) mounted to pivot about a transverse axis (8) on a force takeup structure (5) of the aircraft (1); a retraction actuator (6) for the strut (9), which actuator is arranged to cause the strut (9) to be extended and retracted, with one coupling end (13) articulated to the structure (5); this system (15) comprising at least:
- first anti-crash means arranged to damp the collapse of the landing gear (2) during a first crash phase; and
- second anti-crash means (16), arranged to inhibit the retraction and also to brake
the pivoting of the strut (9) during a second crash phase;
**characterised in that** this system (15) comprises at least:
- means for functionally disconnecting the landing-gear strut (9) relative to the actuator (6), after the end of the first crash phase;
- within the second anti-crash means (16), devices for retaining and blocking the actuator (6); and,
- within the second anti-crash means (16), a device (19, 25) for controlled braking of the pivoting of the landing-gear strut (9), which device is distinct from the retraction actuator (6).

15. A system (15) according to Claim 14,
**characterised in that** this system (15) is suitable for implementing the method in accordance with one of Claims 1 to 13.

16. A system (15) according to Claim 14 or 15,
**characterised in that** the means for functionally disconnecting the strut (9) are separation means which are distinct from the connection (14, 25), for example a shear bolt is arranged to make it possible to release a mechanism for retaining the actuator (6) in the functional position, so that a connecting end (23) of the actuator (6) is detached from the strut (9).

17. A system (15) according to Claim 14 or 15,
**characterised in that** the means for functionally disconnecting the strut (9) are means (19) for tilting the permanent connection (14), for example a shear bolt is arranged to make it possible to release a mechanism for retaining the actuator (6) in the functional position, so that one end (23) of the actuator (6) is released relative to the strut (9), while a fixed articulation (22) of the actuator (6) makes it possible to tilt (19) the permanent connection (14) into a position of alignment of the connecting end (23) and fixed end (22) with an attachment zone (24) for attaching the connection (14, 19) to the strut (9).

18. A system (15) according to one of Claims 14 to 17,
**characterised in that** the retention device is arranged so that the actuator (6) is held substantially in a position where it is out of the way of the strut (9), and is secured to the takeup structure (5).

19. A system (15) according to one of Claims 14 to 18,
**characterised in that** the retention device is at least in part directly secured to the takeup structure (5), for example this device comprises at least:
- a strand which is rigidly fastened by one of its ends to a wall (38) of the structure, such as a floor (10), while the other one of its ends is rigidly fastened to the actuator (6); and/or
- a strand which is rigidly fastened at each of its ends to a wall (38) of the structure (5), such as a floor (10), and forming a catenary-type cradle in which the actuator (6) rests.

20. A system (15) according to one of Claims 14 to 19,
**characterised in that** the retention device is at least in part secured indirectly to the takeup structure (5), for example this device comprises at least one strand which is integral with a braking device (25), for example this strand is integrated in a braking device (25) having straps (26) and/or is rigidly fastened to a wall (38) of the structure (5), such as a floor (10), with:
- one of the ends of the strand which is rigidly fastened to the braking device (25), while its other end is rigidly fastened to the actuator (6); and/or
- each of the ends of the strand which is rigidly fastened to the braking device (25), the strand forming a catenary-type cradle in which the actuator (6) rests.

21. A system (15) according to one of Claims 14 to 20,
**characterised in that** the device for blocking the actuator (6) forms part of the first anti-crash means, for example this blocking device is integrated at least in part in this actuator (6) and is connected to at least one sensor for speed and/or system integrity and/or forces which are applied to the landing gear (2) in order to block the retraction actuator (6) in the position in which it is located when a value measured by the sensor is equal to a predetermined crash value.

22. A system (15) according to one of Claims 14 to 21,
**characterised in that** the braking device (19, 25) of the second anti-crash means (16) is secured on one hand directly or indirectly to the takeup structure (5) and on the other hand to the landing-gear strut (9), for example to an attachment zone (24) or to a sliding tube (12).

23. A system (15) according to one of Claims 14 to 22,
**characterised in that** the braking device (19, 25) and the retention device of the second anti-crash means (16) are formed at least in part or even completely by the same components, for example at least one of the components for securing the braking device (19, 25) to the structure (5) and/or to the landing-gear strut (9) is the same as a component for securing the retention device.

24. A system (15) according to one of Claims 14 to 23,
**characterised in that** the braking device (19, 25) and the retention device of the second anti-crash means (16) are devoid of any pneumatic, hydraulic or electrical components such as control and/or automatic-control components, for example these retention and braking devices (19, 25) are entirely mechanical.

25. A system (15) according to one of Claims 14 to 24,
**characterised in that** the braking device (19, 25) and/or the retention device of the anti-crash means (16) are extended substantially in a longitudinal direction (X), for example in a position in which the retention device at least is out of the way and/or in an end-of-stroke position of the braking device (19, 25).

26. A system (15) according to one of Claims 14 to 25,
**characterised in that** the braking device of the second anti-crash means (16) has at least one member (19, 25) for connection (14) for irreversible deformation by controlled elongation, for example at a substantially constant force.

27. A system (15) according to Claim 26,
**characterised in that** at least one member (25) for connection (14) is of the type which elongates by partial destruction which permits controlled extension of the deformable connection (14, 25), for example this connection (14, 25) is direct between the takeup structure (5) and the landing-gear strut (9).

28. A system (15) according to Claim 26 or 27,
**characterised in that** the deformable connection (14, 25) is non-permanent between the structure (5) and the strut (9), for example this connection (14, 25) is effective when it comprises a sliding tube (12) in the strut (9) and is interposed within the connection (14, 25) by the first anti-crash means, this tube (12) causing the strut (9) to become engaged with a collar (31) or the like of the braking device.

29. A system (15) according to Claim 26,
**characterised in that** at least one member (19) for connection (14) is of the type which elongates by controlled plastic deformation which permits controlled deployment of the deformable connection (19), for example this connection (14, 9) is indirect between the takeup structure (5) and the landing-gear strut (9), and comprises a component (6) for relaying crash forces from the strut (9) to the structure (5).

30. A system according to Claim 29,
**characterised in that** the deformable connection (14, 19) is permanent between the structure (5) and the strut (9), for example this connection (14, 19) is a tilting one between the landing-gear strut (9) and the retraction actuator (6), this actuator (6) remaining constantly articulated to the strut (9) and acting as a component (6) for relaying crash forces from the strut (9) to the structure (5).

31. A system (15) according to one of Claims 14 to 30,
**characterised in that** the braking device (19, 25) of the specific anti-crash means (16) comprises means allowing free movement of the strut (9) relative to the structure (5) over a limited amplitude of the start of the second phase prior to braking, for example these means permit free movement by pivoting through an amplitude of the order of 1° to 30°, for example for a total amplitude of the strut (9) of the order of 90°, this amplitude being of the order of 9° for a braking device (25) which is extensible and non-permanent, while it is of the order of 22° for a braking device (19) which is to be deployed and is permanent.

32. A system (15) according to one of Claims 14 to 31,
**characterised in that** the braking device for braking the strut (9) comprises a stop (39) for absorbing crash energy in the second crash phase by plastic deformation, for example this stop comprises a front wall (39) of a compartment (11) for stowing the retracted landing gear (2), which wall is deformed at the end of the second crash phase by a sliding tube (12) of the upper end of the landing-gear strut (9).

33. A system (15) according to one of Claims 26 to 31,
**characterised in that** the plastic deformation member (19, 25) comprises at least one horseshoe-shaped part (19) which is suitable for being deformed by irreversible straightening, and/or a tube-shaped part which is suitable for being deformed by irreversible retraction, for example the connection (14) has two horseshoe-shaped parts (19) arranged symmetrically on either side of a mid-plane (X, Z) of longitudinal elevation.

34. A system (15) according to Claim 33,
**characterised in that** a single horseshoe-shaped part (19) is arranged substantially in a mid-plane (X, Z) of longitudinal elevation and comprises on one hand a mobile articulation (21) connected to a connection end (23) of the actuator (6), and on the other hand an articulation (22) connected to an attachment zone (24) for attaching the strut (9), the articulations (21, 22) of the horseshoe-shaped part (19) being substantially extended in a transverse direction (Y).

35. A system (15) according to Claim 26,
**characterised in that** the member (25) for connection (14) is non-permanent by extension by partial destruction and comprises at least one strap (26) which is coiled into at least one series of loops which are held coiled by destructible retaining arrangements (27), for example these arrangements (27) comprise stitching and/or gluing and/or welding, the destruction of which permits controlled, progressive deployment of the connecting strap (26).

36. A system (15) according to Claim 35,
**characterised in that** the member (25) for connection (14) comprises at least one strap (26), the coiled portion of which acts as the portion suitable for being subjected to the destruction action, for example this strap (26) is arranged in a cradle in order to form a portion of the retention device for retaining the actuator (6) which is extended close to and at least in part about a lower portion of this actuator (6).

37. A system (15) according to Claim 36,
**characterised in that** the member (25) for connection (14) comprises three straps (26) in a cradle which are arranged in a U-shape, with on one hand a rear articulation fitting (17) on the takeup structure (5) and on the other hand a front collar (31) which is intended to encircle the destination landing-gear strut (9), for example a central strap (26) of the U-shaped cradle is arranged above the actuator (6) and beneath the floor (10) of the structure (5), with two other lateral straps (26) extending downwards from the central strap (26).

38. A system (15) according to Claim 37,
**characterised in that** the collar (31) is made of very high-grade steel such as a steel of type Z15CM17.03.

39. A system (15) according to Claim 37 or 38,
**characterised in that** the member (25) forming the U-shaped cradle comprises at least:
- a transversely central bottom strap (26) arranged substantially in a longitudinal and transverse plane; and
- two lateral straps (26) forming the limbs of the "U" and arranged on either side of the bottom strap (26), substantially symmetrically relative to a mid-plane of longitudinal elevation;
these straps (26) being articulated in turn-back openings (28), each by its longitudinal ends on one hand to the rear articulation fitting (17) on the structure (5) and on the other hand to the front collar (31) for encircling the landing-gear strut (9).

40. A system (15) according to one of Claims 26 to 39,
**characterised in that** the member (25) for non-permanent connection (14) which is partially destroyed and of controlled deployment comprises at least two controlled-rupture securing elements (18), intended for holding a front collar (31) for encircling the landing-gear strut (9) temporarily until the second crash phase.

41. An aircraft (1), for example a rotary-wing aircraft; this aircraft comprising at least one anti-crash landing gear (2) which is on board the aircraft (1) and is retractable, having at least: a landing-gear strut (9) mounted to pivot about a transverse axis (8) on a force takeup structure (5) of the aircraft (1); a retraction actuator (6) for the strut (9), which actuator is arranged to cause the strut (9) to be extended and retracted, with one coupling end (13) articulated to the structure (5); this landing gear (2) being coupled to an anti-crash system (15) and comprising at least: first anti-crash means arranged to damp the collapse of the landing gear (2) in a first crash phase; and second anti-crash means (16), arranged to inhibit the retraction, and also to brake the pivoting of the strut (9) during a second crash phase;
**characterised in that** this system (15) comprises at least: means for functionally disconnecting the landing-gear leg (9) relative to the actuator (6), after the end of the first crash phase; within the second anti-crash means (16), devices for retaining and blocking the actuator (6); and, within the second anti-crash means (16), a device (19, 25) for controlled braking of the pivoting of the landing-gear strut (9), which device is distinct from the retraction actuator (6).

42. An aircraft (1) according to Claim 41,
**characterised in that** the takeup structure (5) comprises at least one releasable wall (38) surrounded by a zone of weakness (37) such as an assembly by means of glue and/or rivets, which is arranged so that, in the first crash phase, a portion (12) of a landing-gear strut (9) strikes this upper wall (38) and disconnects it from the rest of the structure (5) at the location of the zone (37), without any significant absorption of energy.

43. An aircraft (1) according to Claim 42,
**characterised in that** the takeup structure (5) comprises at least one stop (39) for absorbing crash energy in the second crash phase by plastic deformation, for example this stop comprises a front wall (39) of a compartment (11) for stowing the retracted landing gear (2) which is deformed at the end of the second crash phase by a sliding tube (12) of the upper end of the landing-gear strut (9).
